# EUROPEAN PATENT APPLICATION

(11) **EP 4 580 252 A1**
(43) Date of publication of application: **02.07.2025**
(21) Application number: 23870781.4
(22) Date of filing: 26.09.2023
(51) Int. Cl.: H04W 36/00

(54) **COMMUNICATION METHOD, APPARATUS AND SYSTEM**

(30) Priority: 30.09.2022 CN 202211231930
(71) Applicant: Huawei Technologies Co., Ltd., Shenzhen, Guangdong 518129 (CN)
(72) Inventor: GU, Zhifang, Shenzhen, Guangdong 518129 (CN); FAN, Qiang, Shenzhen, Guangdong 518129 (CN); YOU, Chunhua, Shenzhen, Guangdong 518129 (CN)
(74) Representative: Körber, Martin Hans
(86) International application number: PCT/CN2023/121424
(87) International publication number: WO 2024/067552

(57) **Abstract**

A communication method, apparatus, and system are provided, and relate to the field of communication technologies. In the method, a terminal device may receive first indication information from a first access network device on a radio resource of a source cell, where the first indication information indicates the terminal device to measure a downlink channel state for a downlink reference signal of at least one candidate cell; receive second indication information from the first access network device, where the second indication information indicates the terminal device to perform a handover from the source cell to a target cell, and the at least one candidate cell includes the target cell; and send uplink information to a second access network device on a radio resource of the target cell, where the uplink information includes downlink channel state information of the target cell, and a downlink channel state of the target cell is obtained by the terminal device by measuring a downlink reference signal of the target cell based on the first indication information. The method can be used to improve a data transmission capacity between the terminal device and the target cell after the terminal device performs the handover to the target cell.

## Description

### CROSS-REFERENCE TO RELATED APPLICATIONS

This application claims priority to Chinese Patent Application No. 202211231930.9, filed with the China National Intellectual Property Administration on September 30, 2022 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

In a mobile communication system, due to location movement of a terminal device, a communication link between the terminal device and a network device (for example, an access network device) changes. The network device indicates, based on movement of the terminal device, the terminal device to perform a cell handover, so that the terminal device performs the handover from a source cell to a target cell.

To improve a data transmission capacity between the terminal device and the target cell, after the handover, the terminal device immediately completes beam direction alignment with the target cell, so that the terminal device communicates, in an accurate beam direction, with an access network device corresponding to the target cell.

However, within a period of time after the terminal device completes the cell handover, the data transmission capacity between the terminal device and the target cell is improved to a limited extent through only beam direction alignment. How to further improve the data transmission capacity is still an important problem that needs to be urgently resolved.

### SUMMARY

Embodiments of this application provide a communication method, apparatus, and system, to improve a data transmission capacity between a terminal device and a target cell in time and effectively after the terminal device performs a handover to the target cell in a cell handover scenario.

According to a first aspect, an embodiment of this application provides a communication method. The method may be applied to a terminal device or a chip in the terminal device. The method may include: receiving first indication information from a first access network device on a radio resource of a source cell, where the first indication information indicates the terminal device to measure a downlink channel state for a downlink reference signal of at least one candidate cell; receiving second indication information from the first access network device, where the second indication information indicates the terminal device to perform a handover from the source cell to a target cell, and the at least one candidate cell includes the target cell; and sending uplink information to a second access network device on a radio resource of the target cell, where the uplink information includes downlink channel state information of the target cell, and the downlink channel state information of the target cell is obtained by the terminal device by measuring a downlink reference signal of the target cell based on the first indication information.

According to the method, the terminal device can measure a downlink channel state for the downlink reference signal of the target cell in advance based on the first indication information from the first access network device. In this way, after performing the handover from the source cell to the target cell, the terminal device can use an available radio resource of the target cell as early as possible, and send, to the second access network device that manages the target cell, the downlink channel state information that is of the target cell and that is measured based on the first indication information, to improve a data transmission capacity between the terminal device and the target cell.

With reference to the first aspect, in a possible design, the method may further include: receiving third indication information from the first access network device on a radio resource of the source cell, where the third indication information indicates an association relationship between the downlink reference signal of the at least one candidate cell and an uplink radio resource of the source cell, and/or indicates an association relationship between the downlink reference signal of the at least one candidate cell and an uplink radio resource of the at least one candidate cell.

According to the method, the terminal device can learn, based on the third indication information from the first access network device, which information needs to be reported to the first access network device and which information needs to be reported to the second access network device. In this way, after performing the handover to the target cell, the terminal device can use the available radio resource of the target cell as early as possible, and send, to the second access network device that manages the target cell, the downlink channel state information that is of the target cell and that is measured based on the first indication information, to improve the data transmission capacity between the terminal device and the target cell.

With reference to the first aspect, in a possible design, the third indication information is carried in a first message. The first message further indicates the terminal device to measure a reference signal received power RSRP of the downlink reference signal of the at least one candidate cell.

With reference to the first aspect, in a possible design, the first access network device includes a first DU, the first DU is controlled by a CU, and at least one DU centrally controlled by the CU includes the first DU. The receiving third indication information from the first access network device includes: receiving the third indication information from the CU. In other words, the communication method in this embodiment of this application is applicable to a CU-DU separated architecture.

In this embodiment of this application, a message that carries the first indication information may be referred to as a CIS request message. The CSI request message may be flexibly implemented in at least one implementation. Specific examples are as follows:
Example 1: The first indication information is carried in a second message. The second message further includes activation indication information. The activation indication information indicates the terminal device to activate a transmission configuration indicator TCI state associated with the downlink reference signal of the at least one candidate cell. That the first indication information indicates the terminal device to measure a downlink channel state for a downlink reference signal of at least one candidate cell specifically includes: The first indication information indicates the terminal device to measure the downlink channel state for the downlink reference signal that is of the at least one candidate cell and that is associated with the to-be-activated TCI state.
Example 2: The first indication information is carried in a third message. The third message further includes the second indication information. The second indication information includes identification information of the target cell. That the first indication information indicates the terminal device to measure a downlink channel state for a downlink reference signal of at least one candidate cell specifically includes: The first indication information indicates the terminal device to measure the downlink channel state for the downlink reference signal of the target cell.

With reference to the first aspect, in a possible design, the method further includes: receiving fourth indication information from the first access network device on a radio resource of the source cell, where the fourth indication information indicates the terminal device to report the downlink channel state information of the target cell to the target cell after the terminal device performs the handover to the target cell.

According to the method, the terminal device can learn, based on the fourth indication information from the first access network device, that the downlink channel state information of the target cell needs to be sent to the second access network device as early as possible.

With reference to the first aspect, in a possible design, the uplink information further includes fifth indication information. The fifth indication information indicates whether the uplink information includes the downlink channel state information of the target cell.

According to the method, the terminal device can further send the fifth indication information to the second access network device, to notify the second access network device whether the terminal device has synchronously sent the downlink channel state information of the target cell in the uplink information. Based on this, in one aspect, the second access network device can parse the received uplink message in time to obtain the downlink channel state information of the target cell, to perform data transmission scheduling based on the downlink channel state information of the target cell. In another aspect, the second access network device does not need to indicate the terminal device to measure CSI of the target cell, which helps reduce signaling overheads.

With reference to the first aspect, in a possible design, the method further includes: receiving sixth indication information from the first access network device on a radio resource of the source cell, where the sixth indication information indicates the terminal device to send an uplink channel sounding reference signal to the at least one candidate cell; and sending an uplink channel sounding reference signal to the target cell on a radio resource of the target cell.

According to the method, the terminal device can send the uplink channel sounding reference signal to the target cell in advance based on the sixth indication information from the first access network device, instead of making the terminal device wait for the second access network device that manages the target cell to indicate the terminal device to send the uplink channel sounding reference signal to the target cell. Then, the second access network device can receive the uplink channel sounding reference signal from the terminal device in advance, and perform operations such as channel estimation and calculation on the received uplink channel sounding reference signal, to sense accurate CSI, so as to improve the data transmission capacity between the terminal device and the target cell.

With reference to the first aspect, in a possible design, the at least one candidate cell belongs to N candidate cell groups, N is an integer greater than or equal to 1, and each candidate cell group includes a primary cell and at least one secondary cell. The method further includes: receiving seventh indication information from the first access network device on a radio resource of the source cell, where the seventh indication information indicates the terminal device to send, to the second access network device, downlink channel state information obtained by measuring, based on the first indication information, a downlink reference signal of a primary cell in a target cell group to which the target cell belongs, and the target cell includes the primary cell in the target cell group; or the seventh indication information indicates the terminal device to send, to the second access network device, downlink channel state information obtained by measuring, based on the first indication information, downlink reference signals of all cells in the target cell group to which the target cell belongs, and the target cell includes the primary cell and/or a secondary cell in the target cell group.

With reference to the first aspect, in a possible design, that the second indication information indicates the terminal device to perform a handover from the source cell to a target cell specifically includes: The second indication information indicates the terminal device to perform the handover from the source cell to the primary cell in the target cell group, or the second indication information indicates the terminal device to perform the handover from the source cell to the primary cell or the secondary cell in the target cell group.

According to the method, when the candidate cell group is related, the terminal device determines, by receiving the seventh indication information from the first access network device, whether to report the downlink channel state information of the primary cell in the target cell group or report the downlink channel state information of all the cells in the target cell group to the second access network device. In this way, the second access network device performs transmission scheduling in different handover cases based on received downlink state information, to improve the data transmission capacity between the terminal device and the target cell.

With reference to the first aspect, in a possible design, the downlink state information of the target cell includes at least one of the following: a precoding matrix index PMI, channel quality information CQI, or a rank indicator RI.

According to a second aspect, an embodiment of this application provides a communication method. The method is applied to a first access network device or a chip in the first access network device. The first access network device manages a source cell of a terminal device. The method may include: sending first indication information and fourth indication information to the terminal device on a radio resource of the source cell, where the first indication information indicates the terminal device to measure a downlink channel state for a downlink reference signal of at least one candidate cell, and the fourth indication information is used by the terminal device to report downlink channel state information of a target cell to the target cell after the terminal device performs a handover to the target cell; and sending second indication information to the terminal device on a radio resource of the source cell, where the second indication information indicates the terminal device to perform the handover from the source cell to the target cell.

According to the method, the first access network device that manages the source cell can deliver the first indication information and the fourth indication information to the terminal device in advance, to indicate the terminal device to measure the downlink channel state for the downlink reference signal of the candidate cell in advance. In this way, after performing the handover from the source cell to the target cell, the terminal device can use an available radio resource of the target cell as early as possible, and send, to a second access network device that manages the target cell, the downlink channel state information that is of the target cell and that is measured based on the first indication information, to improve a data transmission capacity between the terminal device and the target cell.

With reference to the second aspect, in a possible design, the fourth indication information is carried in a first message, and the fourth indication information includes third indication information. The third indication information indicates an association relationship between the downlink reference signal of the at least one candidate cell and an uplink radio resource of the source cell, and/or indicates an association relationship between the downlink reference signal of the at least one candidate cell and an uplink radio resource of the at least one candidate cell.

According to the method, the first access network device can send the third indication information to the terminal device, so that the terminal device learns which information needs to be reported to the first access network device and which information needs to be reported to the second access network device. In this way, after performing the handover to the target cell, the terminal device can use the available radio resource of the target cell as early as possible, and send, to the second access network device that manages the target cell, the downlink channel state information that is of the target cell and that is measured based on the first indication information, to improve the data transmission capacity between the terminal device and the target cell.

With reference to the second aspect, in a possible design, the first message further indicates the terminal device to measure a reference signal received power RSRP of the downlink reference signal of the at least one candidate cell.

With reference to the second aspect, in a possible design, the first access network device includes a first DU, the first DU is controlled by a CU, and at least one DU centrally controlled by the CU includes the first DU and a third DU that manages the at least one candidate cell. The method further includes: sending first resource configuration information to the CU via the first DU, and receiving the third indication information sent by the CU based on the first resource configuration information; or receiving second resource configuration information from the third DU via the CU, and sending the third indication information to the terminal device based on the second resource configuration information.

In other words, the communication method in this embodiment of this application is applicable to a CU-DU separated architecture. In the architecture, the first DU and the third DU can perform communicative interaction with the CU, to complete association between the to-be-measured downlink reference signal and an uplink radio resource and indicate the association to the terminal device. In this way, after obtaining the downlink channel state information of the target cell through measurement based on the first indication information, the terminal device learns how to report the downlink channel state information to the first access network device or the second access network device.

With reference to the second aspect, in a possible design, the first indication information is carried in a second message. The second message further includes activation indication information. The activation indication information indicates the terminal device to activate a transmission configuration indicator TCI state associated with the downlink reference signal of the at least one candidate cell. That the first indication information indicates the terminal device to measure a downlink channel state for a downlink reference signal of at least one candidate cell specifically includes: The first indication information indicates the terminal device to measure the downlink channel state for the downlink reference signal that is of the at least one candidate cell and that is associated with the to-be-activated TCI state.

According to the method, the second message can be used as an implementation of a CSI request message that carries the first indication information, and the first indication information is sent or received in association with the activation indication information. The implementation of the CSI request message is more flexible.

With reference to the second aspect, in a possible design, the first indication information is carried in a third message. The third message further includes the second indication information. The second indication information includes identification information of the target cell. That the first indication information indicates the terminal device to measure a downlink channel state for a downlink reference signal of at least one candidate cell specifically includes: The first indication information indicates the terminal device to measure a downlink channel state for a downlink reference signal of the target cell.

According to the method, the third message can be used as an implementation of the CSI request message that carries the first indication information, and is sent or received in association with handover indication information (namely, the second indication information). The implementation of the CSI request message is more flexible.

With reference to the second aspect, in a possible design, the method further includes: sending the fourth indication information to the terminal device on a radio resource of the source cell, where the fourth indication information indicates the terminal device to report the downlink channel state information of the target cell to the target cell after the terminal device performs the handover to the target cell.

According to the method, the first access network device can send the fourth indication information to the terminal device. In this way, the terminal device learns that the downlink channel state information of the target cell needs to be sent to the second access network device as early as possible.

With reference to the second aspect, in a possible design, the method further includes: sending sixth indication information to the terminal device on a radio resource of the source cell, where the sixth indication information indicates the terminal device to send an uplink channel sounding reference signal to the at least one candidate cell.

According to the method, the first access network device can send the sixth indication information to the terminal device, to indicate the terminal device to send an uplink channel sounding reference signal to the target cell in advance, instead of making the terminal device wait for the second access network device that manages the target cell to indicate the terminal device to send the uplink channel sounding reference signal to the target cell. Then, the second access network device can receive the uplink channel sounding reference signal from the terminal device in advance, and perform operations such as channel estimation and calculation on the received uplink channel sounding reference signal, to sense accurate CSI, so as to improve the data transmission capacity between the terminal device and the target cell.

With reference to the second aspect, in a possible design, the at least one candidate cell belongs to N candidate cell groups, N is an integer greater than or equal to 1, and each candidate cell group includes a primary cell and at least one secondary cell. The method further includes: receiving eighth indication information from a third access network device, where the third access network device manages the N candidate cell groups, and the eighth indication information indicates the primary cell and the at least one secondary cell in each of the N candidate cell groups; and sending seventh indication information to the terminal device on a radio resource of the source cell based on the eighth indication information, where the seventh indication information indicates the terminal device to send, to the second access network device, downlink channel state information obtained by measuring, based on the first indication information, a downlink reference signal of a primary cell in a target cell group to which the target cell belongs, and the target cell includes the primary cell in the target cell group; or the seventh indication information indicates the terminal device to send, to the second access network device, downlink channel state information obtained by measuring, based on the first indication information, downlink reference signals of the primary cell and at least one secondary cell in the target cell group to which the target cell belongs, and the target cell includes the primary cell and/or the secondary cell in the target cell group.

With reference to the second aspect, in a possible design, that the second indication information indicates the terminal device to perform the handover from the source cell to the target cell specifically includes: The second indication information indicates the terminal device to perform the handover from the source cell to the primary cell in the target cell group, or the second indication information indicates the terminal device to perform the handover from the source cell to the primary cell or the secondary cell in the target cell group.

According to the method, when the candidate cell group is related, the first access network device can send the seventh indication information to the terminal device, so that the terminal device learns whether to report the downlink channel state information of the primary cell in the target cell group or report downlink channel state information of all cells in the target cell group to the second access network device. In this way, the second access network device performs transmission scheduling in different handover cases based on received downlink state information, to improve the data transmission capacity between the terminal device and the target cell.

With reference to the second aspect, in a possible design, the first access network device includes the first DU, the third access network device includes the third DU, and the first DU and the third DU are controlled by a same CU. The receiving eighth indication information from a third access network device includes: receiving the eighth indication information from the third DU via the CU.

According to the method, in the CU-DU separated architecture, the first DU and the third DU can perform communicative interaction with the CU, to complete resource configuration for the candidate cell group, so that after receiving the seventh indication information from the first access network device, the terminal device can learn whether to report the downlink channel state information of the primary cell in the target cell group or report the downlink channel state information of all the cells in the target cell group to the second access network device. In this way, the second access network device performs transmission scheduling in different handover cases based on the received downlink state information, to improve the data transmission capacity between the terminal device and the target cell.

With reference to the second aspect, in a possible design, the downlink state information includes at least one of the following: a precoding matrix index PMI, channel quality information CQI, or a rank indicator RI.

According to a third aspect, an embodiment of this application provides a communication method. The method is applied to a terminal device or a chip in the terminal device. The method may include: receiving sixth indication information from a first access network device on a radio resource of a source cell, where the sixth indication information indicates the terminal device to send an uplink channel sounding reference signal to at least one candidate cell; receiving second indication information from the first access network device, where the second indication information indicates the terminal device to perform a handover from the source cell to a target cell, and the at least one candidate cell includes the target cell; and sending an uplink channel sounding reference signal to the target cell on a radio resource of the target cell.

According to the method, the terminal device can send the uplink channel sounding reference signal to the target cell in advance based on the sixth indication information from the first access network device, instead of making the terminal device wait for a second access network device that manages the target cell to indicate the terminal device to send the uplink channel sounding reference signal to the target cell. Then, the second access network device can receive the uplink channel sounding reference signal from the terminal device in advance, and perform operations such as channel estimation and calculation on the received uplink channel sounding reference signal, to sense accurate CSI, so as to improve a data transmission capacity between the terminal device and the target cell.

With reference to the third aspect, in a possible design, the method further includes: receiving third indication information from the first access network device on a radio resource of the source cell, where the third indication information indicates an association relationship between an uplink channel sounding reference signal of the at least one candidate cell and an uplink radio resource of the source cell, and/or indicates an association relationship between a downlink reference signal of the at least one candidate cell and an uplink radio resource of the at least one candidate cell.

According to the method, the terminal device can learn, based on the third indication information from the first access network device, which information needs to be reported to the first access network device and which information needs to be reported to the second access network device. In this way, after performing the handover to the target cell, the terminal device can use an available radio resource of the target cell as early as possible, and send the uplink channel sounding reference signal to the second access network device that manages the target cell, to improve the data transmission capacity between the terminal device and the target cell.

With reference to the third aspect, in a possible design, the third indication information is carried in a first message. The first message further indicates the terminal device to measure a reference signal received power RSRP of the downlink reference signal of the at least one candidate cell.

With reference to the third aspect, in a possible design, the first access network device includes a first DU, the first DU is controlled by a CU, and at least one DU centrally controlled by the CU includes the first DU. The receiving third indication information from the first access network device includes: receiving the third indication information from the CU. In other words, the communication method in this embodiment of this application is applicable to a CU-DU separated architecture.

In this embodiment of this application, a message that carries the sixth indication information may be referred to as an SRS request message. The SRS request message may be flexibly implemented in at least one implementation. Specific examples are as follows:
Example 1: The sixth indication information is carried in a fourth message. The fourth message further includes activation indication information. The activation indication information indicates the terminal device to activate a transmission configuration indicator TCI state associated with the downlink reference signal of the at least one candidate cell. That the sixth indication information indicates the terminal device to send an uplink channel sounding reference signal to at least one candidate cell specifically includes: The sixth indication information indicates the terminal device to send the uplink channel sounding reference signal to the at least one candidate cell based on the to-be-activated TCI state.
Example 2: The sixth indication information is carried in a fifth message. The fifth message further includes the second indication information. The second indication information includes identification information of the target cell. That the sixth indication information indicates the terminal device to send an uplink channel sounding reference signal to at least one candidate cell specifically includes: The sixth indication information indicates the terminal device to send the uplink channel sounding reference signal to the target cell.

With reference to the third aspect, in a possible design, the sixth indication information further indicates a sending occasion of the uplink channel sounding reference signal. The sending occasion includes any one of the following: before the terminal device performs a cell handover, when the terminal device performs the cell handover, and after the terminal device performs the handover to the target cell. The terminal device may consider, as a start moment at which the terminal device performs a cell handover action, a moment at which a handover command from the first receiving network device is received, and consider, as a handover completion moment, a moment at which the terminal device accesses the target cell and starts to use a radio resource of the target cell to perform communicative interaction with the second access network device. A time period before the start moment is before the terminal device performs the cell handover. A time period between the start moment and the handover completion moment is when the terminal device performs the cell handover. After the handover completion moment, the terminal device completes the cell handover (or the terminal device performs the handover to the target cell).

With reference to the third aspect, in a possible design, tenth indication information from the first access network device is received on a radio resource of the source cell. The tenth indication information indicates the terminal device to send the uplink channel sounding reference signal to the target cell after the terminal device performs the handover to the target cell.

According to the method, the terminal device can learn, based on the tenth indication information from the first access network device, that the uplink channel sounding reference signal needs to be sent to the second access network device as early as possible.

According to a fourth aspect, an embodiment of this application provides a communication method. The method is applied to a first access network device or a chip in the first access network device. The first access network device manages a source cell of a terminal device. The method may include: sending sixth indication information to the terminal device on a radio resource of the source cell, where the sixth indication information indicates the terminal device to send an uplink channel sounding reference signal to at least one candidate cell; and sending second indication information to the terminal device on a radio resource of the source cell, where the second indication information indicates the terminal device to perform a handover from the source cell to a target cell, and the at least one candidate cell includes the target cell.

According to the method, the first access network device that manages the source cell can deliver the sixth indication information to the terminal device in advance, to indicate the terminal device to send an uplink channel sounding reference signal to the target cell in advance, instead of making the terminal device wait for a second access network device that manages the target cell to indicate the terminal device to send the uplink channel sounding reference signal to the target cell. Then, the second access network device can receive the uplink channel sounding reference signal from the terminal device in advance, and perform operations such as channel estimation and calculation on the received uplink channel sounding reference signal, to sense accurate CSI, so as to improve a data transmission capacity between the terminal device and the target cell.

With reference to the fourth aspect, in a possible design, the method further includes: sending a first message to the terminal device on a radio resource of the source cell, where the first message includes third indication information, and the third indication information indicates an association relationship between an uplink channel sounding reference signal of the at least one candidate cell and an uplink radio resource of the source cell, and/or indicates an association relationship between a downlink reference signal of the at least one candidate cell and an uplink radio resource of the at least one candidate cell.

With reference to the fourth aspect, in a possible design, the first message further indicates the terminal device to measure a reference signal received power RSRP of the downlink reference signal of the at least one candidate cell.

With reference to the fourth aspect, in a possible design, the first access network device includes a first DU, the first DU is controlled by a CU, and at least one DU centrally controlled by the CU includes the first DU and a third DU that manages the at least one candidate cell. The method further includes: sending first resource configuration information to the CU via the first DU, and receiving the third indication information sent by the CU based on the first resource configuration information; or receiving second resource configuration information from the third DU via the CU, and sending the third indication information to the terminal device based on the second resource configuration information.

With reference to the fourth aspect, in a possible design, the sixth indication information is carried in a fourth message. The fourth message further includes activation indication information. The activation indication information indicates the terminal device to activate a transmission configuration indicator TCI state associated with the downlink reference signal of the at least one candidate cell. That the sixth indication information indicates the terminal device to send an uplink channel sounding reference signal to at least one candidate cell specifically includes: The sixth indication information indicates the terminal device to send the uplink channel sounding reference signal to the at least one candidate cell based on the TCI state.

With reference to the fourth aspect, in a possible design, the sixth indication information is carried in a fifth message. The fifth message further includes the second indication information. The second indication information includes identification information of the target cell. That the sixth indication information indicates the terminal device to send an uplink channel sounding reference signal to at least one candidate cell specifically includes: The sixth indication information indicates the terminal device to send the uplink channel sounding reference signal to the target cell.

With reference to the fourth aspect, in a possible design, the sixth indication information further indicates a sending occasion of the uplink channel sounding reference signal. The sending occasion includes any one of the following: before the terminal device performs the handover to the target cell, when the terminal device performs the handover to the target cell, and after the terminal device performs the handover to the target cell.

With reference to the fourth aspect, in a possible design, the method further includes: sending ninth indication information to the second access network device that manages the target cell, where the ninth indication information indicates to receive the uplink channel sounding reference signal from the terminal device.

With reference to the fourth aspect, in a possible design, the method further includes: sending tenth indication information to the terminal device on a radio resource of the source cell, where the tenth indication information indicates the terminal device to send the uplink channel sounding reference signal to the target cell after the terminal device performs the handover to the target cell.

According to a fifth aspect, an embodiment of this application provides a communication method. The method may be applied to a first access network device or a chip in the first access network device. The first access network device manages a source cell of a terminal device, and the first access network device includes a first DU. The first DU is controlled by a CU. The method may include: receiving a to-be-measured reference signal resource of at least one candidate cell from the CU; generating an association relationship between the to-be-measured reference signal resource of the at least one candidate cell and an uplink radio resource of the source cell; and sending configuration information of the association relationship to the CU, where the configuration information of the association relationship is used by the CU to generate radio resource control RRC signaling that is to be sent to the terminal device.

With reference to the fifth aspect, in a possible design, the RRC signaling indicates the terminal device to measure a reference signal received power RSRP of a downlink reference signal of the at least one candidate cell.

According to a sixth aspect, an embodiment of this application provides a communication method. The method is applied to a third DU, the third DU manages at least one candidate cell, and the third DU is controlled by a CU. The method includes: receiving a to-be-measured reference signal resource of a source cell from the CU; generating an association relationship between the to-be-measured reference signal resource of the source cell and an uplink radio resource of the at least one candidate cell; and sending configuration information of the association relationship to the CU, where the configuration information of the association relationship is used by the CU to generate radio resource control RRC signaling that is to be sent to a terminal device.

With reference to the sixth aspect, in a possible design, the RRC signaling indicates the terminal device to measure a reference signal received power RSRP of a downlink reference signal of the at least one candidate cell.

According to a seventh aspect, an embodiment of this application provides a communication apparatus, including: a receiving unit, configured to: receive first indication information from a first access network device on a radio resource of a source cell, where the first indication information indicates a terminal device to measure a downlink channel state for a downlink reference signal of at least one candidate cell; and receive second indication information from the first access network device, where the second indication information indicates the terminal device to perform a handover from the source cell to a target cell, and the at least one candidate cell includes the target cell; and a sending unit, configured to send uplink information to a second access network device on a radio resource of the target cell, where the uplink information includes downlink channel state information of the target cell, and the downlink channel state information of the target cell is obtained by the terminal device by measuring a downlink reference signal of the target cell based on the first indication information.

According to an eighth aspect, an embodiment of this application provides a communication apparatus, including a transceiver unit, configured to: send first indication information and fourth indication information to a terminal device on a radio resource of a source cell, where the first indication information indicates the terminal device to measure a downlink channel state for a downlink reference signal of at least one candidate cell, and the fourth indication information is used by the terminal device to report downlink channel state information of a target cell to the target cell after the terminal device performs a handover to the target cell; and send second indication information to the terminal device on a radio resource of the source cell, where the second indication information indicates the terminal device to perform the handover from the source cell to the target cell.

According to a ninth aspect, an embodiment of this application provides a communication apparatus, including: a receiving unit, configured to: receive sixth indication information from a first access network device on a radio resource of a source cell, where the sixth indication information indicates a terminal device to send an uplink channel sounding reference signal to at least one candidate cell; and receive second indication information from the first access network device, where the second indication information indicates the terminal device to perform a handover from the source cell to a target cell, and the at least one candidate cell includes the target cell; and a sending unit, configured to send an uplink channel sounding reference signal to the target cell on a radio resource of the target cell.

According to a tenth aspect, an embodiment of this application provides a communication apparatus, including a sending unit, configured to: send sixth indication information to a terminal device on a radio resource of a source cell, where the sixth indication information indicates the terminal device to send an uplink channel sounding reference signal to at least one candidate cell; and send second indication information to the terminal device on a radio resource of the source cell, where the second indication information indicates the terminal device to perform a handover from the source cell to a target cell, and the at least one candidate cell includes the target cell.

According to an eleventh aspect, an embodiment of this application provides a communication apparatus, used in a first access network device or a chip in the first access network device. The first access network device manages a source cell of a terminal device, and the first access network device includes a first DU. The first DU is controlled by a CU. The communication apparatus includes: a receiving unit, configured to receive a to-be-measured reference signal resource of at least one candidate cell from the CU; a processing unit, configured to generate an association relationship between the to-be-measured reference signal resource of the at least one candidate cell and an uplink radio resource of the source cell; and a sending unit, configured to send configuration information of the association relationship to the CU, where the configuration information of the association relationship is used by the CU to generate radio resource control RRC signaling that is to be sent to the terminal device.

According to a twelfth aspect, an embodiment of this application provides a communication apparatus, used in a third DU. The third DU manages at least one candidate cell, and the third DU is controlled by a CU. The communication apparatus includes: a receiving unit, configured to receive a to-be-measured reference signal resource of a source cell from the CU; a processing unit, configured to generate an association relationship between the to-be-measured reference signal resource of the source cell and an uplink radio resource of the at least one candidate cell; and a sending unit, configured to send configuration information of the association relationship to the CU, where the configuration information of the association relationship is used by the CU to generate radio resource control RRC signaling that is to be sent to a terminal device.

According to a thirteenth aspect, an embodiment of this application provides a communication apparatus, including at least one processor and an interface circuit. The interface circuit is configured to provide data or code instructions to the at least one processor. The at least one processor is configured to implement, by using a logic circuit or executing the code instructions, the method according to any one of the first aspect and the possible designs of the first aspect, or the method according to any one of the second aspect and the possible designs of the second aspect, or the method according to any one of the third aspect and the possible designs of the third aspect, or the method according to any one of the fourth aspect and the possible designs of the fourth aspect, or the method according to any one of the fifth aspect and the possible designs of the fifth aspect, or the method according to any one of the sixth aspect and the possible designs of the sixth aspect.

According to a fourteenth aspect, an embodiment of this application provides a computer-readable storage medium. The computer-readable medium stores program code. When the program code is run on a computer, the computer is enabled to perform the method according to any one of the first aspect and the possible designs of the first aspect, or perform the method according to any one of the second aspect and the possible designs of the second aspect, or perform the method according to any one of the third aspect and the possible designs of the third aspect, or perform the method according to any one of the fourth aspect and the possible designs of the fourth aspect, or perform the method according to any one of the fifth aspect and the possible designs of the fifth aspect, or perform the method according to any one of the sixth aspect and the possible designs of the sixth aspect.

According to a fifteenth aspect, an embodiment of this application provides a computer program product. When the computer program product runs on a computer, the computer is enabled to perform the method according to any one of the first aspect and the possible designs of the first aspect, or perform the method according to any one of the second aspect and the possible designs of the second aspect, or perform the method according to any one of the third aspect and the possible designs of the third aspect, or perform the method according to any one of the fourth aspect and the possible designs of the fourth aspect, or perform the method according to any one of the fifth aspect and the possible designs of the fifth aspect, or perform the method according to any one of the sixth aspect and the possible designs of the sixth aspect.

According to a sixteenth aspect, an embodiment of this application provides a communication system. The communication system may include a communication apparatus configured to implement the method according to any one of the first aspect and the possible designs of the first aspect, or include a communication apparatus configured to implement the method according to any one of the second aspect and the possible designs of the second aspect, or include a communication apparatus configured to implement the method according to any one of the third aspect and the possible designs of the third aspect, or include a communication apparatus configured to implement the method according to any one of the fourth aspect and the possible designs of the fourth aspect, or include a communication apparatus configured to implement the method according to any one of the fifth aspect and the possible designs of the fifth aspect, or include a communication apparatus configured to implement the method according to any one of the sixth aspect and the possible designs of the sixth aspect.

Based on the implementations provided in the foregoing aspects, embodiments of this application may be further combined to provide more implementations.

For technical effect that can be achieved in any possible implementation of any one of the third aspect to the sixteenth aspect, correspondingly refer to descriptions of technical effect that can be achieved in any possible implementation of the first aspect or the second aspect. Repeated details are not described.

### BRIEF DESCRIPTION OF DRAWINGS

FIG. 1 is a diagram of an architecture of a communication system to which an embodiment of this application is applicable;
FIG. 2 is a schematic flowchart of a communication method according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a diagram of a communication apparatus according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

Embodiments of this application provide a communication method, apparatus, and system, to improve a data transmission capacity between a terminal device and a target cell in time and effectively after the terminal device completes a cell handover. The method and the apparatus are based on a same technical concept. Because problem-resolving principles of the method and the apparatus are similar, implementations of the apparatus and the method may be mutually referenced. Repeated details are not described again. In addition, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

In descriptions of this application, words such as "first" and "second" are used merely for distinguishing between descriptions, but should not be understood as an indication or implication of relative importance, or should not be understood as an indication of implication of a sequence.

In the descriptions of this application, "at least one" means one or more, and "a plurality of" means two or more.

With reference to the accompanying drawings, the following describes in detail a communication method and apparatus provided in embodiments of this application, to describe the technical solutions in embodiments of this application more clearly.

The communication method in embodiments of this application may be applied to various communication systems, such as a universal mobile telecommunications system (universal mobile telecommunications system, UMTS), a code division multiple access (code division multiple access, CDMA) system, a wireless local area network (wireless local area network, WLAN), a long term evolution (long term evolution, LTE) system, an LTE frequency division duplex (frequency division duplex, FDD) system, an LTE time division duplex (time division duplex, TDD) system, and a 5th generation (5th generation, 5G) mobile communication system or a new radio (new radio, NR) system, or applied to a future communication system (for example, a 6th generation (6th Generation, 6G) system) or another similar communication system.

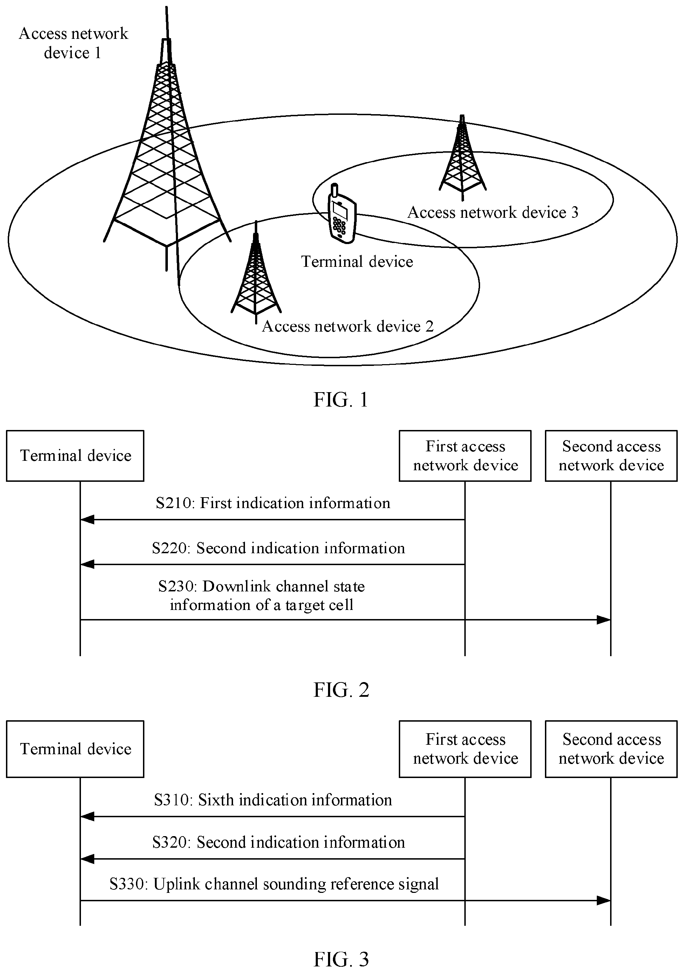

For example, FIG. 1 is a diagram of an architecture of a communication system to which the communication method is applicable according to an embodiment of this application. The communication system may include access network devices (for example, an access network device 1, an access network device 2, and an access network device 3 in FIG. 1) and a terminal device. The terminal device is located in coverage of one or more cells (carriers) provided by the access network device, and one or more cells may serve the terminal device. When a plurality of cells serve the terminal device, the terminal device may work in a carrier aggregation (carrier aggregation, CA), dual connectivity (dual connectivity, DC), or coordinated multipoint transmission/reception (coordinated multiple points transmission/reception, CoMP) manner. At least one of the plurality of cells serving the terminal device is used to provide more than one transmission numerology (numerology) to provide a radio resource for the terminal device. For example, as shown in FIG. 1, the terminal device is located in a cell of the access network device 1, a cell of the access network device 2, and a cell of the access network device 3. The access network device 1 may be a macro base station (for example, a macro eNB), and each of the access network device 2 and the access network device 3 may be a micro base station (for example, a small eNB).

The terminal device, also referred to as user equipment (user equipment, UE), a mobile station (mobile station, MS), a mobile terminal (mobile terminal, MT), or the like, is a device that provides voice and/or data connectivity for a user, for example, a handheld device or a vehicle-mounted device having a wireless connection function. Currently, some examples of the terminal may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like, or may be a chip, a chip module (or a chip system), or the like that can be disposed in the foregoing device. An application scenario is not limited in embodiments of this application. In this application, a terminal device having a wireless transceiver function and a chip that can be disposed in the terminal device are collectively referred to as a terminal device.

The access network device is a radio access network (radio access network, RAN) node (or device) that enables the terminal device to access a wireless network, and may also be referred to as a base station. Currently, some examples of the RAN node may be a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a base band unit (base band unit, BBU), a wireless fidelity (wireless fidelity, Wi-Fi) access point (access point, AP), and the like.

In addition, in a network structure, the access network device may be a RAN device that includes a central unit (central unit, CU) node or a distributed unit (distributed unit, DU) node, or includes the CU node and the DU node. The RAN device that includes the CU node and the DU node splits protocol layers of an eNB in an LTE system. Functions of a part of the protocol layers are centrally controlled by the CU, and functions of a part or all of remaining protocol layers are distributed in the DU, and the CU centrally controls the DU. For example, in some deployments, the gNB may include a CU and a DU. The gNB may further include a radio frequency unit (radio unit, RU). The CU implements a part of functions of the gNB, and the DU implements a part of the functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a medium access control (medium access control, MAC) layer, and a physical (physical, PHY) layer.

It should be noted that the devices shown in the communication system shown in FIG. 1 are merely examples, and another type of device, for example, a core network device, may be further included. Devices are not shown one by one in this application.

It should be noted that a quantity of devices shown in the communication system shown in FIG. 1 is merely an example. It should be understood that more or fewer devices may be further included. This is not limited in this application.

Terms in this application are first briefly described, to better understand the communication method provided in embodiments of this application.

### 1. Cell (cell)

The cell is described from a perspective of resource management, mobility management, or a service unit. Coverage of each access network device may be divided into one or more cells. In addition, each cell may correspond to one or more frequencies. In other words, each cell may be considered as an area formed by coverage of the one or more frequencies.

It should be noted that the cell may be an area within coverage of a wireless network of the access network device. In embodiments of this application, different cells may correspond to a same access network device or different access network devices. For example, in some embodiments, there is a one-to-one relationship between the access network device and the cell, that is, one access network device manages one cell. In some other implementations, there is a one-to-many relationship between the access network device and the cells, that is, a same access network device may manage at least two different cells.

In a mobile communication system in embodiments of this application, due to location movement of a terminal device, a communication link between the terminal device and the access network device changes. The access network device indicates, based on movement of the terminal device, the terminal device to perform a cell handover. For ease of differentiation and understanding, the cells described in embodiments of this application are classified into the following three types.
(1) A source cell (source cell) is a cell to which the terminal device belongs before the terminal device performs the cell handover.
(2) A candidate cell is at least one cell to which the terminal device may perform the handover when the terminal device performs the cell handover. The at least one candidate cell of the terminal device includes a target cell.
(3) The target cell (target cell) is a cell to which the terminal device finally needs to perform the handover.

An access network device that manages a radio resource of the source cell is referred to as a first access network device, and an access network device that manages a radio resource of the target cell is referred to as a second access network device. The first access network device and the second access network device may be devices in an intra-site handover scenario, and the first access network device and the second access network device may be a same device. In the intra-site handover scenario, communication between the first access network device and the second access network device is intra-site communication. Optionally, an access network device that manages a radio resource of the candidate cell may be further referred to as a third access network device. The second access network device is a special case of the third access network device. The third access network device and the first access network device may also be a same device. In the intra-site handover scenario, communication between the first access network device and the third access network device is intra-site communication. Any two of the first access network device, the second access network device, and the third access network device that are described in the following method embodiments may be a same device or different devices. This is not limited in embodiments of this application.

It should be noted that, in embodiments of this application, N represents a quantity of source cells of the terminal device, M represents a quantity of target cells of the terminal device, and N and M may be integers greater than or equal to 1. When N>1, the plurality of source cells may be referred to as a source cell group. When M>1, the plurality of target cells may be referred to as a target cell group.

The target cell group may be determined by the first access network device from a plurality of candidate cells through a decision. Optionally, the plurality of candidate cells may also be preconfigured to belong to at least one candidate cell group, and each candidate cell group may include one or more cells. In some embodiments, grouping of the candidate cell group may be fixed. Configuration information of the candidate cell group may be provided, for the first access network device, by the third access network device that manages the candidate cell, so that the first access network device decides the target cell group from the candidate cell group. In some other embodiments, grouping of the candidate cell group may be non-fixed. The plurality of candidate cells are considered to belong to a same candidate cell group. The first access network device decides a primary cell (primary cell, PCell) and a secondary cell (secondary cell, SCell) of the target from the plurality of candidate cells in the group. For a cell group (including the source cell group, the candidate cell group, or the target cell group), one cell group may generally include one primary cell and at least one secondary cell. The following describes a configuration manner of the candidate cell group with reference to an embodiment. Details are not described herein.

### 2. Serving cell

To communicate with an access network device, a terminal device needs to establish a wireless connection to a cell controlled by the access network device. The cell to which the wireless connection is established by the terminal device may be referred to as a serving cell of the terminal device.

In embodiments of this application, the serving cell is a source cell before the terminal device performs a cell handover. The serving cell is a target cell after the terminal device performs the cell handover.

### 3. Reference signal (reference signal, RS)

According to an LTE/new radio (new radio access technology, NR) protocol, at a physical layer, uplink communication includes transmission of an uplink physical channel and an uplink reference signal, and downlink communication includes transmission of a downlink physical channel and a downlink reference signal.

The uplink physical channel includes a random access channel (random access channel, PRACH), a physical uplink control channel (physical uplink control channel, PUCCH), a physical uplink shared channel (physical uplink shared channel, PUSCH), and the like. The uplink reference signal includes a channel sounding reference signal (sounding reference signal, SRS), a PUCCH-demodulation reference signal (demodulation reference signal, DMRS), a PUSCH-DMRS, an uplink phase noise tracking reference signal (phase noise tracking reference signal, PTRS), an uplink positioning reference signal (uplink positioning RS), and the like.

The downlink physical channel includes a physical broadcast channel (physical broadcast channel, PBCH), a physical downlink control channel (physical downlink control channel, PDCCH), a physical downlink shared channel (physical downlink shared channel, PDSCH), and the like. The downlink reference signal includes a primary synchronization signal (primary synchronization signal, PSS)/secondary synchronization signal (secondary synchronization signal, SSS), a PDCCH-DMRS, a PDSCH-DMRS, a downlink PTRS, a channel state information reference signal (channel state information reference signal, CSI-RS), a cell reference signal (cell reference signal, CRS) (not available in NR), a time/frequency tracking reference signal (time/frequency tracking reference signal, TRS) (not available in LTE), an LTE/NR positioning reference signal (positioning RS), and the like.

### 4. Quasi colocation/quasi co-location (quasi co-location, QCL)

A quasi co-location relationship indicates that a plurality of resources have one or more same or similar communication features.

Same or similar communication configurations may be used for the plurality of resources having the quasi co-location relationship. For example, if two antenna ports have a quasi co-location relationship, a large-scale property of a channel over which one symbol is conveyed through one port may be inferred from a large-scale property of a channel over which one symbol is conveyed through the other port. The large-scale property may include delay spread, an average delay, Doppler spread, a Doppler shift, an average gain, a receive parameter, a receive beam number of a terminal device, transmit/receive channel correlation, a receive angle of arrival, spatial correlation of a receiver antenna, a dominant angle of arrival (angle of arrival, AoA), an average angle of arrival, AoA spread, and the like. That a quasi co-location indication indicates whether at least two groups of antenna ports have a quasi co-location relationship is as follows: The quasi co-location indication indicates whether channel state information reference signals sent through the at least two groups of antenna ports are from a same transmission point, or the quasi co-location indication indicates whether channel state information reference signals sent through the at least two groups of antenna ports are from a same beam direction.

In other words, if there is a QCL relationship, the terminal device may inherit a receiving or sending parameter used when a reference signal is previously received, to receive or send a subsequent signal.

A QCL type (Type) includes QCL-Type A, QCL-Type B, QCL-Type C, QCL-Type D, and the like. QCL-Type A, QCL-Type B, and QCL-Type C indicate information such as time domain and frequency domain, and assist the terminal device in data receiving, demodulation, and the like. QCL-Type D indicates a beam, and assists the terminal device in beamforming.

### 5. Beam (beam)

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams.

Optionally, a plurality of beams having a same communication feature or similar communication features may be considered as one beam. One beam may be formed using one or more antenna ports, and is used to transmit a data channel, a control channel, a reference signal, and the like. The one or more antenna ports for forming the beam may be considered as one antenna port set.

The beam includes a transmit beam and a receive beam. The transmit beam may be distribution of signal strength formed in different directions in space after a signal is transmitted through an antenna. The receive beam may be distribution in which an antenna array enhances or weakens reception of a radio signal in different directions in the space.

In a current NR protocol, beam information may be indicated using a QCL relationship. Specifically, indication information (for example, downlink control information (downlink control information, DCI)) may indicate that one resource (or antenna port) and another resource (or antenna port) have a quasi co-location relationship, to indicate that beams corresponding to the two resources (or antenna ports) have one or more same or similar spatial features (or parameters), and a same receive beam may be used for receiving.

In the protocol, the beam may be specifically represented using identifiers of various signals, for example, a resource index of a CSI-RS, an index of a synchronization signal/broadcast channel block (synchronous signal/physical broadcast channel block, SSB), a resource index of an SRS, and a resource index of a TRS.

Generally, one beam corresponds to one DMRS port, one transmission configuration indicator (transmission configuration indicator, TCI), one sounding reference signal resource indicator (SRS resource indicator, SRI) (used for uplink data transmission), a resource index of one CSI-RS, or an index of one SSB. Therefore, different beams may also be represented using different DMRS ports, TCIs, or SRIs.

### 6. TCI

The TCI is a field that indicates a quasi co-location of uplink transmission and/or downlink transmission. The TCI may be configured using radio resource control (radio resource control, RRC) signaling, and referred to as a TCI state (State) in the RRC signaling. A higher layer configures one or more QCL relationships using the TCI state.

For example, if the TCI state includes information about QCL-Type D, the TCI state may indicate one or more beams. The TCI state indicated by the TCI field includes QCL information or spatial domain filtering information. The QCL information or the spatial domain filtering information includes a reference signal. The reference signal may be a synchronization signal block (synchronization signal block, SSB), or the reference signal may be a channel state information reference signal (Channel state information, CSI-RS), and a CSI-RS resource identifier (resource identity) indicates a resource index of the reference signal, or the reference signal may be a resource index of an SRS.

In embodiments of this application, the TCI state is associated with a downlink reference signal (for example, a CSI-RS or an SSB) or an uplink reference signal (for example, an SRS), and is used as an uplink/downlink beam indication in beam management. An access network device may activate a plurality of TCI states for a terminal device, and further indicate a beam direction of a specific TCI state that needs to be used by the terminal device in the plurality of activated TCI states. When the access network device indicates that a TCI state used by the terminal device is not in an active state before, it takes a long time for the terminal device to switch to the beam direction corresponding to the newly indicated TCI state. When the access network device indicates that the TCI state used by the terminal device is previously in the active state, the terminal device may quickly switch to the beam direction corresponding to the newly indicated TCI state.

### 7. L1 and/or L2 handover

The L1 and/or L2 handover means that a terminal device performs, mainly at L1 and/or L2, an operation related to a cell handover.

L1 is generally a physical layer, and L2 is generally a MAC/RLC/PDCP/service data adaptation protocol (service data adaptation protocol, SDAP) layer.

Specifically, that a terminal device performs, mainly at L1 and/or L2, an operation related to a cell handover may include: The terminal device sends an L1 measurement result to a first access network device using physical layer control signaling (carried on a physical uplink control channel (physical uplink control channel, PUCCH)), and a physical layer of the first access network device reads the L1 measurement result, makes a decision based on the L1 measurement result, and determines the target cell. The first access network device sends, to the terminal device using L1 and/or L2 signaling, a handover command obtained through the decision. The L1 and/or L2 signaling may be a message carried on a physical downlink control channel (physical downlink control channel, PDCCH), or may be a MAC control element (MAC control element, MAC CE).

It should be understood that, in embodiments of this application, in the "L1 and/or L2 handover", when a relationship is "and", the operation related to the cell handover process is mainly jointly completed by L1 and L2, and when the relationship is "or", the operation related to the cell handover is mainly completed by L1 or L2. The "L1 and/or L2 handover" is merely an example of a name of the operation related to the cell handover, but is not a limitation. In another embodiment, the process may also be referred to as an "L1/L2 handover", a "(lower) low-layer handover", an "underlying handover", or another name. Details are not described herein again.

### 8. Technology for improving a data transmission capacity

### (1) Beam alignment

A terminal device communicates with an access network device (for example, a first access network device or a second access network device) in an accurate beam direction, to improve the data transmission capacity.

Generally, there are the following two beam alignment manners.
①. A terminal device measures a reference signal received power (reference signal received power, RSRP) of a downlink reference signal of a serving cell (for example, a source cell existing before a cell handover or a target cell obtained after the cell handover is performed), and reports RSRPs of different downlink reference signals to an access network device. Because the access network device sends different reference signals in different beam directions, the access network device may learn of a better beam direction based on the RSRPs of the downlink reference signals fed back by the terminal device. The downlink reference signal may be a synchronization signal and physical broadcast channel block (synchronization signal and physical broadcast channel block, SSB), or may be a channel state information reference signal (channel state information reference signal, CSI-RS) or another type of reference signal.
②. A terminal device sends different uplink reference signals in different beam directions. An access network device measures signal strength of different uplink reference signals, and may select a better beam direction based on the signal strength. The access network device may notify the terminal device of information about the selected beam direction.

### (2) Scheduling technology based on downlink channel state information (channel state information, CSI)

A terminal device measures a downlink reference signal (for example, a CSI-RS) of a serving cell (for example, a source cell existing before a cell handover or a target cell obtained after the cell handover is performed), performs operations such as channel estimation and calculation, and feeds back, to an access network device corresponding to the serving cell, CSI obtained through estimation. For example, the CSI may include but is not limited to a precoding matrix index (precoding matrix index, PMI), channel quality information (Channel Quality Information, CQI), or a rank indicator (rank indicator, RI) (or referred to as a stream number indicator).

Based on the CSI, the access network device may more appropriately determine a specific manner used to schedule uplink and downlink data transmission for the terminal device. For example, when a channel state is good, a base station may schedule a data packet with more data content for transmission, or schedule a higher-order modulation and coding scheme, or use a precoding scheme applicable to a current channel state, to improve the data transmission capacity.

### (3) Scheduling technology based on uplink CSI

A terminal device sends an uplink reference signal (for example, a channel sounding reference signal (sounding reference signal, SRS)) to an access network device corresponding to a serving cell (for example, a source cell existing before a cell handover or a target cell obtained after the cell handover is performed). The access network device receives the uplink reference signal, and performs operations such as channel estimation and calculation on the received uplink reference signal, to sense accurate CSI. The access network device may more appropriately determine, using the CSI, a specific manner used to schedule uplink and downlink data transmission for the terminal device. For example, when a channel state is good, a base station may schedule a data packet with more data content for transmission, or schedule a higher-order modulation and coding scheme, or use a precoding scheme applicable to a current channel state, to improve the data transmission capacity.

For the three technologies for improving the data transmission capacity: the foregoing solutions (1), (2), and (3), the following combination solutions may be used to effectively improve the data transmission capacity:
the solutions (1) and (2);
the solutions (1) and (3); and
the solutions (1), (2), and (3).

### 9. Handover completion

In embodiments of this application, handover completion means that a terminal device performs a handover from a source cell to a target cell and uses a radio resource of the target cell to perform communicative transmission with an access network device corresponding to the target cell.

Currently, to improve a data transmission capacity between a terminal device and a target cell, the terminal device usually immediately completes beam direction alignment with the target cell after performing the handover to the target cell, so that the terminal device communicates, in an accurate beam direction, with an access network device corresponding to the target cell. However, within a period of time after the terminal device performs the cell handover and accesses the target cell, the access network device corresponding to the target cell cannot sense accurate channel information in time. The access network device cannot perform appropriate data transmission scheduling based on the accurate channel information. As a result, the data transmission capacity between the terminal device and the target cell is low. Therefore, how to further improve the data transmission capacity is still an important problem that needs to be urgently resolved.

For the foregoing problem, embodiments of this application provide a communication method, apparatus, and system, to help improve a data transmission capacity between a terminal device and a target cell in time and effectively after the terminal device performs the handover to the target cell in a cell handover scenario.

It should be noted that, in embodiments of this application, a device for implementing the communication method may include a terminal device, a processor in the terminal device, a chip or a chip system, a functional module, or the like. A device interacting with the terminal device may be an access network device, a processor in the access network device, a chip or a chip system, a functional module, or the like. In the following embodiments, the communication method provided in this application is described in detail only by using an example in which execution bodies are the terminal device and the access network device. However, this constitutes no limitation on this application.

Based on the foregoing descriptions, the communication method provided in embodiments of this application is applicable to the communication system shown in FIG. 1. In the cell handover scenario, to improve the data transmission capacity between the terminal device and the target cell within a period of time after the terminal device completes the cell handover, the communication system may be configured to improve the data transmission capacity between the terminal device and the target cell in the scheduling manners in the solutions (1) and (2) described above; or the communication system may be configured to improve the data transmission capacity between the terminal device and the target cell in the scheduling manners in the solutions (1) and (3) described above; or the communication system may be configured to improve the data transmission capacity between the terminal device and the target cell in the scheduling manners in the solutions (1), (2), and (3) described above.

To achieve the foregoing technical effect, in a possible implementation, a first access network device that manages a source cell delivers related indication information to the terminal device in advance, to indicate the terminal device to measure a downlink channel state for a downlink reference signal of the target cell in advance. In this way, after performing the handover from the source cell to the target cell, the terminal device can use an available radio resource of the target cell as early as possible, and send, to an access network device that manages the target cell, downlink channel state information that is of the target cell and that is measured based on the related indication information, to improve the data transmission capacity between the terminal device and the target cell using the solution (2) described above.

As shown in FIG. 2, a specific procedure of the implementation may include the following steps.

S210: The first access network device sends first indication information to the terminal device on a radio resource of the source cell. Correspondingly, the terminal device receives the first indication information from the first access network device on a radio resource of the source cell.

In this embodiment of this application, the first indication information may indicate the terminal device to measure a downlink channel state for a downlink reference signal of at least one candidate cell. Then, after receiving the first indication information, the terminal device may start a measurement process for the downlink reference signal of the at least one candidate cell, and obtain corresponding channel state information (channel state information, CSI).

For example, a message that carries the first indication information may be referred to as a CSI request (request) message. For example, the first indication information may include identification information of each to-be-measured downlink reference signal. The identification information may be a unique identifier of the downlink reference signal. Alternatively, for example, the first indication information may include identification information of each candidate cell and identification information of a to-be-measured downlink reference signal of each candidate cell. The identification information of the candidate cell and the identification information of the downlink reference signal may be used as 2-tuple information, to uniquely identify the to-be-measured downlink reference signal. For example, the CSI may include but is not limited to a PMI, CQI, or an RI.

It should be noted that, when S210 is specifically implemented in this embodiment of this application, the CSI request message may be carried in an L2 message that may be, for example, a MAC CE. Alternatively, the CSI request message may be carried in an L1 message that may be, for example, a PDCCH message. An implementation of the message that carries the first indication information is not limited in embodiments of this application.

Optionally, the CSI request message may be implemented in at least one manner. For example, the CSI request message may be an independent message. Alternatively, for example, the CSI request message and activation indication information from the first access network device may be combined and carried in a same message that is referred to as an activation (activation) command (command) (for example, represented as a second message). Alternatively, for example, the CSI request message and handover indication information from the first access network device may be combined and carried in a same message that is referred to as a handover (handover, HO) command (for example, represented as a third message).

Information content included in the CSI request message may be different based on different implementations of the CSI request message. For example, if the CSI request message is carried in the second message, the second message may further include the activation indication information. The activation indication information indicates the terminal device to activate a transmission configuration indicator TCI state associated with the downlink reference signal of the at least one candidate cell. That the first indication information indicates the terminal device to measure a downlink channel state for a downlink reference signal of at least one candidate cell specifically includes: The first indication information indicates the terminal device to measure the downlink channel state for the downlink reference signal that is of the at least one candidate cell and that is associated with the to-be-activated TCI state. Alternatively, for example, if the CSI request message is carried in the third message, the third message may further include second indication information. The second indication information may include identification information of the target cell. That the first indication information indicates the terminal device to measure a downlink channel state for a downlink reference signal of at least one candidate cell specifically includes: The first indication information indicates the terminal device to measure the downlink channel state for the downlink reference signal of the target cell. The following describes different implementations in detail with reference to accompanying drawings and embodiments. Details are not described herein.

Optionally, before S210 is implemented, the first access network device may further send third indication information to the terminal device on a radio resource of the source cell. Correspondingly, the terminal device may receive the third indication information from the first access network device on a radio resource of the source cell. The third indication information may be carried in a first message. The third indication information may indicate an association relationship between the downlink reference signal of the at least one candidate cell and an uplink radio resource of the source cell, and/or indicate an association relationship between the downlink reference signal of the at least one candidate cell and an uplink radio resource of the at least one candidate cell. The first message may further indicate the terminal device to measure an RSRP of the downlink reference signal of the at least one candidate cell. Therefore, the terminal device can learn, based on the third indication information from the first access network device, which information needs to be reported to the first access network device and which information needs to be reported to a second access network device. In this way, after performing the handover to the target cell, the terminal device can use the available radio resource of the target cell as early as possible, and send, to the second access network device that manages the target cell, the downlink channel state information that is of the target cell and that is measured based on the first indication information, to improve the data transmission capacity between the terminal device and the target cell.

Optionally, the terminal device may further receive fourth indication information from the first access network device on a radio resource of the source cell. The fourth indication information indicates the terminal device to report the downlink channel state information of the target cell to the target cell after the terminal device performs the handover to the target cell. In this way, the terminal device can learn, based on the related fourth indication information from the first access network device, that the downlink channel state information of the target cell needs to be sent to the second access network device as early as possible. In a possible implementation, the fourth indication information may include the third indication information (or the fourth indication information is the third indication information). To be specific, the downlink reference signal of the at least one candidate cell is associated with the uplink radio resource of the at least one candidate cell, to indicate the terminal device to send the downlink channel state information to a candidate cell (namely, the subsequent target cell) when the terminal device performs the handover to the candidate cell. In another possible implementation, the fourth indication information may alternatively be a piece of information different from the third indication information. For example, the fourth indication information and the first indication information may be carried in a same message. This is not limited in embodiments of this application.

S220: The first access network device sends the second indication information to the terminal device on a radio resource of the source cell. Correspondingly, the terminal device receives the second indication information from the first access network device.

In this embodiment of this application, the second indication information indicates the terminal device to perform the handover from the source cell to the target cell. The at least one candidate cell includes the target cell. For example, the second indication information may be carried in the handover command from the first access network device.

S230: The terminal device sends uplink information to the second access network device on a radio resource of the target cell. Correspondingly, the second receiving network device receives the uplink information from the terminal device.

In this embodiment of this application, after performing the handover to the target cell, the terminal device can send the uplink information to the second access network device on an available resource of the target cell as early as possible. The uplink information may include the downlink channel state information of the target cell. The downlink channel state information of the target cell is obtained by the terminal device by measuring the downlink reference signal of the target cell based on the first indication information. For example, the downlink channel state information may include a PMI, CQI, or an RI obtained by measuring the downlink reference signal of the target cell.

After receiving the uplink information, the second access network device may more appropriately determine, based on the downlink channel state information of the target cell, a specific manner used to schedule uplink and downlink data transmission for the terminal device. For example, when a channel state is good, a base station may schedule a data packet with more data content for transmission, or schedule a higher-order modulation and coding scheme, or use a precoding scheme applicable to a current channel state, to improve the data transmission capacity. The following describes details of the foregoing implementation with reference to related descriptions of Scenario 1 and Scenario 2. Details are not described herein.

Optionally, if the implementation shown in FIG. 2 is applied to a scenario in which the terminal device performs the cell handover and the handover relates to a cell group (group), for example, the handover may relate to a source cell group, a target cell group, or the source cell group and the target cell group. Correspondingly, in the foregoing implementation described with reference to FIG. 2, the first access network device may be configured to manage cells included in the source cell group, for example, a primary cell and at least one secondary cell. The second access network device may be configured to manage cells included in the target cell group, for example, a primary cell and at least one secondary cell.

When S230 is implemented, based on a cell handover agreed on by the terminal device and the first access network device (for example, a change of only the primary cell is considered as a handover, or it is considered as a handover so long as a cell is different), the uplink information sent by the terminal device to the second access network device may include downlink channel state information obtained using a downlink reference signal of the primary cell in the target cell group to which the target cell belongs, or may include downlink channel state information obtained using downlink reference signals of all the cells in the target cell group to which the target cell belongs. If the terminal device and the first access network device do not agree on the cell handover, before S230 is implemented, the first access network device may further send seventh indication information to the terminal device on a radio resource of the source cell. The seventh indication information indicates the terminal device to send, to the second access network device, the downlink channel state information obtained by measuring, based on the first indication information, the downlink reference signal of the primary cell in the target cell group to which the target cell belongs, and the target cell includes the primary cell in the target cell group; or the seventh indication information indicates the terminal device to send, to the second access network device, the downlink channel state information obtained by measuring, based on the first indication information, the downlink reference signals of all the cells in the target cell group to which the target cell belongs, and the target cell includes the primary cell and/or the secondary cell in the target cell group. Optionally, that the second indication information indicates the terminal device to perform the handover from the source cell to the target cell specifically includes: The second indication information indicates the terminal device to perform the handover from the source cell to the primary cell in the target cell group, or the second indication information indicates the terminal device to perform the handover from the source cell to the primary cell or the secondary cell in the target cell group. The following describes details of the foregoing implementation with reference to related descriptions of Scenario 1 and Scenario 2. Details are not described herein.

In another possible implementation, a first access network device that manages a source cell delivers related indication information to the terminal device in advance, to indicate the terminal device to send an uplink channel sounding reference signal to the target cell in advance, instead of making the terminal device wait for a second access network device that manages the target cell to indicate the terminal device to send the uplink channel sounding reference signal to the target cell. Then, the second access network device can receive the uplink channel sounding reference signal from the terminal device in advance, and perform operations such as channel estimation and calculation on the received uplink channel sounding reference signal, to sense accurate CSI, so as to improve the data transmission capacity between the terminal device and the target cell using the solution (3) described above.

As shown in FIG. 3, a specific procedure of the implementation may include the following steps.

S310: The first access network device sends sixth indication information to the terminal device on a radio resource of the source cell. Correspondingly, the terminal device receives the sixth indication information from the first access network device on a radio resource of the source cell.

In this embodiment of this application, the sixth indication information indicates the terminal device to send an uplink channel sounding reference signal SRS to at least one candidate cell.

For example, a message that carries the sixth indication information may be referred to as an SRS request message. For example, the sixth indication information may include identification information of an SRS resource or a resource set. After receiving the sixth indication information, the terminal device may send an SRS based on the sixth indication information. An occasion on which the terminal device sends the SRS is not limited. Optionally, the occasion on which the terminal device sends the SRS may also be indicated by the first access network device. For example, the sixth indication information may further indicate an occasion on which the terminal device sends the uplink channel sounding reference signal to the at least one candidate cell. For example, the sending occasion may include: before the terminal device performs the cell handover, when the terminal device performs the cell handover, or after the terminal device completes the cell handover. The terminal device may consider, as a start moment at which the terminal device performs a cell handover action, a moment at which a handover command from the first receiving network device is received, and consider, as a handover completion moment, a moment at which the terminal device accesses the target cell and starts to use a radio resource of the target cell to perform communicative interaction with the second access network device. A time period before the start moment is before the terminal device performs the cell handover. A time period between the start moment and the handover completion moment is when the terminal device performs the cell handover. After the handover completion moment, the terminal device completes the cell handover.

It should be noted that, when S310 is specifically implemented in this embodiment of this application, the SRS request message may be carried in an L2 message that may be, for example, a MAC CE. Alternatively, the SRS request message may be carried in an L1 message that may be, for example, a PDCCH message. An implementation of the message that carries the sixth indication information is not limited in embodiments of this application.

Optionally, similar to that in the implementation of the CSI request message, the SRS request message may also be implemented in at least one manner. For example, the SRS request message may be an independent message. Alternatively, for example, the SRS request message and activation indication information from the first access network device may be combined and carried in a same message that is referred to as an activation command (for example, represented as a fourth message). Alternatively, for example, the SRS request message and handover indication information from the first access network device may be combined and carried in a same message that is referred to as a handover command (for example, represented as a fifth message).

Information content included in the SRS request message may be different based on different implementations of the SRS request message. For example, if the SRS request message is carried in the fourth message, the fourth message may further include the activation indication information. The activation indication information indicates the terminal device to activate a transmission configuration indicator TCI state associated with the uplink channel sounding reference signal of the at least one candidate cell. That the sixth indication information indicates the terminal device to send an uplink channel sounding reference signal to at least one candidate cell specifically includes: The sixth indication information indicates the terminal device to send the uplink channel sounding reference signal to the at least one candidate cell based on the TCI state. Alternatively, for example, if the SRS request message is carried in the fifth message, the fifth message may further include second indication information. The second indication information may include identification information of the target cell. That the sixth indication information indicates the terminal device to send an uplink channel sounding reference signal to at least one candidate cell specifically includes: The sixth indication information indicates the terminal device to send the uplink channel sounding reference signal to the target cell. The following describes different implementations in detail with reference to accompanying drawings and embodiments. Details are not described herein.

Optionally, before S310 is implemented, the first access network device may further send third indication information to the terminal device on a radio resource of the source cell. Correspondingly, the terminal device may receive the third indication information from the first access network device on a radio resource of the source cell. The third indication information may be carried in a first message. The third indication information may indicate an association relationship between the uplink channel sounding reference signal of the at least one candidate cell and an uplink radio resource of the source cell, and/or indicate an association relationship between a downlink reference signal of the at least one candidate cell and an uplink radio resource of the at least one candidate cell. The first message may further indicate the terminal device to measure an RSRP of the downlink reference signal of the at least one candidate cell. Therefore, the terminal device can learn, based on the third indication information from the first access network device, which information needs to be reported to the first access network device and which information needs to be reported to the second access network device. In this way, after performing the handover to the target cell, the terminal device can use an available radio resource of the target cell as early as possible, and send an uplink channel sounding reference signal to the second access network device that manages the target cell, to improve the data transmission capacity between the terminal device and the target cell.

Optionally, the terminal device may further receive tenth indication information from the first access network device on a radio resource of the source cell. The tenth indication information indicates the terminal device to send the uplink channel sounding reference signal to the target cell after the terminal device performs the handover to the target cell. In this way, the terminal device can learn, based on the tenth indication information from the first access network device, that the uplink channel sounding reference signal needs to be sent to the second access network device as early as possible. The tenth indication information and the sixth indication information may be carried in a same message. This is not limited in embodiments of this application.

S320: The first access network device sends the second indication information to the terminal device on a radio resource of the source cell. Correspondingly, the terminal device receives the second indication information from the first access network device.

In this embodiment of this application, the second indication information may also be referred to as handover indication information, and indicates the terminal device to perform the handover from the source cell to the target cell. The at least one candidate cell includes the target cell. For example, the second indication information may be carried in the handover command from the first access network device. It should be understood that the second indication information in S320 may be the same as the second indication information in S220 described with reference to FIG. 2, and indicate the terminal device to perform the handover from the source cell to the target cell. Alternatively, content of a message that carries the second indication information may be different based on different implementations of the CSI request message or the SRS request message described above. The following provides detailed descriptions with reference to accompanying drawings and embodiments. Details are not described herein again.

S330: The terminal device sends the uplink channel sounding reference signal to the target cell.

It should be noted that, this is merely example descriptions of sending, by the terminal device, the uplink SRS to the target cell, and is not any limitation. During specific application, after receiving the sixth indication information, the terminal device may determine, based on content specifically indicated by the sixth indication information, how to send the uplink SRS to the target cell. For example, if the sixth indication information does not indicate the occasion on which the terminal device sends the uplink SRS, the terminal device may send the uplink SRS to the at least one candidate cell in response to the sixth indication information. The at least one candidate cell includes the target cell. If the sixth indication information indicates the occasion on which the terminal device sends the uplink SRS, the terminal device may send the uplink SRS to the at least one candidate cell based on the sending occasion indicated by the sixth indication information. The at least one candidate cell includes the target cell. If the sixth indication information indicates the occasion on which the terminal device sends the uplink SRS, and indicates that the sending occasion is after the terminal device performs the cell handover, the terminal device may send the uplink SRS to the target cell after receiving the second indication information from the first access network device and performing the handover to the target cell. Details are not described herein again.

Optionally, if the implementation shown in FIG. 3 is applied to a scenario in which the terminal device performs the cell handover and the handover relates to a cell group (group), for example, the handover may relate to a source cell group, a target cell group, or the source cell group and the target cell group. Correspondingly, in the foregoing implementation described with reference to FIG. 3, the first access network device may be configured to manage cells included in the source cell group, for example, a primary cell and at least one secondary cell. The second access network device may be configured to manage cells included in the target cell group, for example, a primary cell and at least one secondary cell.

When S330 is implemented, based on a cell handover agreed on by the terminal device and the first access network device (for example, a change of only the primary cell is considered as a handover, or it is considered as a handover so long as a cell is different), that the terminal device sends the uplink channel sounding reference signal to the target cell may specifically include: The terminal device sends an uplink channel sounding reference signal to the primary cell in the target cell group to which the target cell belongs, or may include: The terminal device sends the uplink channel sounding reference signal to the primary cell and/or an uplink channel sounding reference signal to the secondary cell in the target cell group to which the target cell belongs. If the terminal device and the first access network device do not agree on the cell handover, before S330 is implemented, the first access network device may further send seventh indication information to the terminal device on a radio resource of the source cell. The seventh indication information indicates the terminal device to send, based on the sixth indication information, the uplink channel sounding reference signal to the primary cell in the target cell group to which the target cell belongs, or may indicate the terminal device to send, based on the sixth indication information, the uplink channel sounding reference signal to the primary cell or the secondary cell in the target cell group to which the target cell belongs. The following describes details of the foregoing implementation with reference to related descriptions of Scenario 1 and Scenario 2. Details are not described herein.

In embodiments of this application, the communication system shown in FIG. 1 may be configured to improve the data transmission capacity between the terminal device and the target cell according to the method shown in FIG. 2 and/or the method shown in FIG. 3. Details of the communication method in embodiments of this application are different based on different implementations of the CSI request message that carries the first indication information and/or different implementations of the SRS request message that carries the sixth indication information. For ease of understanding, the following describes the communication method in embodiments of this application in detail with reference to accompanying drawings and embodiments.

Scenario 1: A terminal device performs a handover from a single source cell to a single target cell.

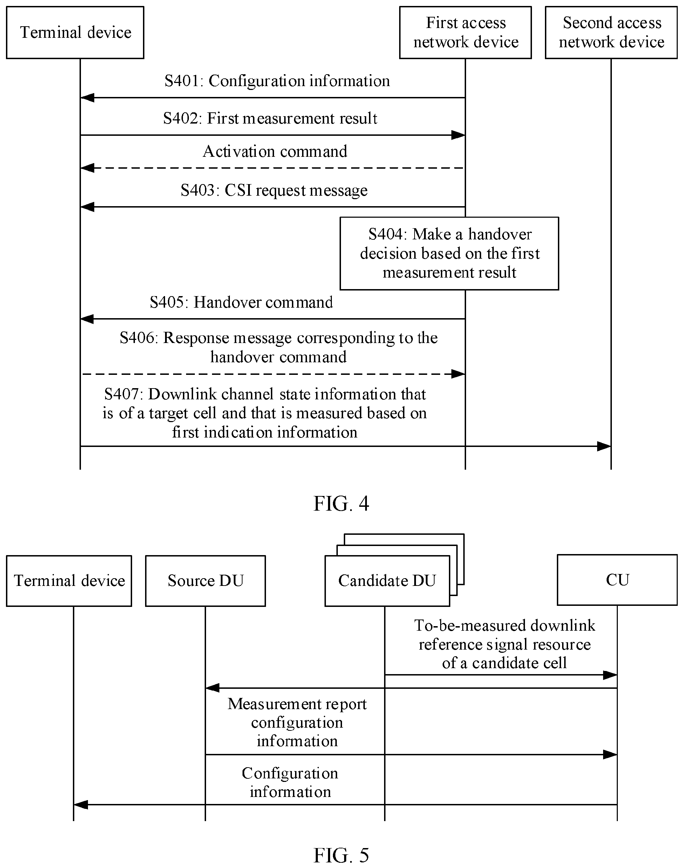

As shown in FIG. 4, in Scenario 1, the communication method may include the following steps.

S401: A first access network device sends configuration information of at least one candidate cell to the terminal device. Correspondingly, the terminal device receives the configuration information from the first access network device. It should be understood that, before step S401, the terminal device may receive configuration information of a current serving cell (the source cell), or in step S401, the configuration information sent by the first access network device to the terminal device may also include the configuration information of the current serving cell (the source cell). An implementation of the configuration information of the source cell is not limited in embodiments of this application.

The configuration information may include measurement configuration information. The measurement configuration information may include but is not limited to a to-be-measured object, a reporting configuration, a measurement quantity configuration, and the like. It may be understood that a message that carries the configuration information may be the first message described above.

The to-be-measured object includes a to-be-measured reference signal resource set and a time-frequency resource configuration of the to-be-measured reference signal resource set.

The reporting configuration includes a reporting manner (for example, periodic, semi-persistent, aperiodic, or event-triggered reporting) and a reporting radio resource configuration (for example, an uplink physical control channel configuration or an uplink physical data channel configuration). The reporting configuration may be associated with the to-be-measured object, that is, indicate a specific reporting configuration used by the terminal device for a specific to-be-measured object.

The measurement quantity configuration indicates a specific measurement quantity measured by the terminal device for the to-be-measured object, for example, RSRP measurement, PMI measurement, CQI measurement, or RI measurement.

In this embodiment of this application, for a measurement-related behavior toward the candidate cell, content of some measurement results is suitable to report to the first access network device. For example, an RSRP measurement result of the candidate cell needs to be provided to the first access network device, so that the first access network device makes a cell handover decision, to determine the target cell of the terminal device from the at least one candidate cell. However, content of some measurement results is suitable to report when the candidate cell is used as the target cell. For example, a CSI measurement result of the target cell needs to be provided to a second access network device, so that the second access network device performs data transmission scheduling reference based on the CSI measurement result of the target cell. Therefore, in a possible implementation, the configuration information may further include third indication information. The third indication information indicates an association relationship between a downlink reference signal of the at least one candidate cell and an uplink radio resource of the source cell, and/or indicates an association relationship between the downlink reference signal of the at least one candidate cell and an uplink radio resource of the at least one candidate cell.

For ease of differentiation, configuration information of each candidate cell may be classified into two types: first configuration information and second configuration information. The first configuration information includes configuration content that needs to be read/loaded/effective when the terminal device is in the source cell. The second configuration information includes configuration content that needs to be read/loaded/effective after the terminal device performs a handover to a corresponding target cell when a candidate cell is used as the target cell.

For example, a cell 0 represents the source cell in which the terminal device is located, and a cell 1, a cell 2, and a cell 3 represent the at least one candidate cell of the terminal device. The configuration information exchanged in S401 may include first configuration information and second configuration information of the candidate cell cell 1, first configuration information and second configuration information of the candidate cell cell 2, and first configuration information and second configuration information of the candidate cell cell 3. The candidate cell cell 1 is used as an example. The first configuration information of the cell 1 may include a measurement-related configuration (for example, referred to as measurement configuration information) of the cell 1, for example, reference signal configuration information corresponding to RSRP measurement and/or reference signal configuration information corresponding to CSI measurement. In other words, it indicates that the terminal device needs to measure a reference signal of the candidate cell cell 1 when being in the source cell. The second configuration information of the candidate cell cell 1 may include PDCCH configuration information or other cell configuration information of the cell 1. To be specific, the terminal device needs to receive, based on the PDCCH configuration information of the cell 1, a PDCCH message only after performing the handover to the cell 1.

Based on this, in the first configuration information (measurement configuration information) included in the configuration information in S401, a measurement parameter related to the reporting configuration may further include an association relationship between a to-be-reported measurement result and an uplink resource of the source cell/candidate cell, to indicate whether the measurement result is reported to the first access network device on a radio resource of the source cell or reported to the second access network device on a radio resource of the target cell. It should be understood that the association relationship between the measurement result and the uplink radio resource may be replaced with an association relationship between the to-be-measured object and the reporting configuration.

During specific implementation, a measurement result that needs to be reported on a radio resource of the source cell may be referred to as a first measurement result, and a measurement result that needs to be reported on a radio resource of the target cell may be referred to as a second measurement result.
(1) The first configuration information (measurement configuration information) included in the configuration information in S401 may indicate an association relationship between the first measurement result and the radio resource of the source cell, and indicate that the first measurement result needs to be reported to the first access network device on the radio resource of the source cell. For example, if there is an association relationship between a to-be-measured reference signal resource cell 1 CSI-RS 1 of the candidate cell cell 1 and a radio resource cell 0 PUCCH resource 0 of the source cell cell 0, it indicates that the terminal device reports a measurement result of the CSI-RS 1 of the cell 1 on a PUCCH resource 0 of the cell 0.
(2) The first configuration information (measurement configuration information) included in the configuration information in S401 may indicate an association relationship between the second measurement result and the radio resource of the target cell, so that after performing the handover to the target cell, the terminal device reports the second measurement result to the second access network device on the radio resource of the target cell associated with the second measurement result. Alternatively, the measurement configuration information may not indicate the association relationship between the second measurement result and the radio resource of the target cell, but may specify, using a protocol, that the terminal device reports the second measurement result to the second access network device on the radio resource of the target cell after performing the handover to the target cell. For example, after the terminal device performs the handover to the target cell, if there is a preconfigured periodic uplink grant of the target cell, the terminal device determines whether an uplink resource corresponding to an earliest uplink grant can accommodate sending of the second measurement result, and sends the second measurement result if the uplink resource corresponding to the earliest uplink grant can accommodate sending of the second measurement result. If there is no preconfigured periodic uplink grant of the target cell, after receiving a dynamic grant of the target cell, the terminal device determines whether an uplink resource corresponding to the dynamic grant can accommodate sending of the second measurement result, and sends the second measurement result if the uplink resource corresponding to the dynamic grant can accommodate sending of the second measurement result.

It should be understood that, in this embodiment of this application, the configuration information in S401 may be carried in an RRC signaling message from the first access network device. The first access network device may learn, via the first access network device or through communicative interaction with the second access network device, which measurement results need to be reported to the first access network device on a radio resource of the source cell and which measurement results need to be reported to the second access network device on a radio resource of the target cell, generate a complete RRC signaling message based on this, and send the complete RRC signaling message to the terminal device.

For example, a CU-DU separated architecture is used for the first access network device and a third access network device that manages the at least one candidate cell. A same CU may control a DU (for example, represented as a source DU) that manages the source cell and a DU (for example, represented as a candidate DU) that manages the at least one candidate cell. In the architecture, the third indication information may be from the CU, and sent to the terminal device via the source DU. The CU may obtain the third indication information by interacting with the candidate DU and/or the source DU. Details are as follows:
For example, as shown in FIG. 5, (1) for the first measurement result that needs to be reported on the radio resource of the source cell, the candidate DU may send a to-be-measured reference signal resource of the candidate cell to the CU, the CU sends the to-be-measured reference signal resource of the candidate cell to the source DU, and the source DU generates an association relationship between the to-be-measured reference signal resource of the candidate cell and a radio resource that is of the source cell and that is used for measurement and reporting. Configuration information (for example, referred to as measurement report configuration information and represented as first resource configuration information) of the association relationship may be sent by the source DU to the CU. The CU generates a complete RRC signaling message and then sends the complete RRC signaling message to the terminal device. The RRC signaling may include the third indication information.

In a possible implementation, the current serving cell of the terminal device is the cell 1 managed by a DU 1, the candidate cell is the cell 2 managed by a DU 2, and the terminal device obtains configuration information (including the first configuration information and the second configuration information) of the cell 1 and the cell 2. After the terminal device performs the handover from the cell 1 to the cell 2, the terminal device may reserve the configuration information of the cell 1 and the cell 2 for use in a subsequent handover. In this scenario, after performing the handover to the cell 2, the UE further needs to measure the reference signal of the cell 1, and report a measurement result to the DU 2 corresponding to the cell 2. Therefore, there is also an association relationship between a to-be-measured reference signal resource of the cell 1 and a radio resource that is of the cell 2 and that is used for measurement and reporting. The association relationship may also be notified to the terminal device in the manner shown in FIG. 5. To be specific, the source DU provides and sends, to the CU, a to-be-measured reference signal resource of a cell managed by the source DU, the CU sends the to-be-measured reference signal resource to the candidate DU, the candidate DU generates an association relationship between a radio resource that is of the candidate cell and that is used for measurement and reporting and the to-be-measured reference signal resource of the cell provided by the source DU, the candidate DU sends configuration information of the association relationship to the CU, and the CU generates a complete RRC signaling message and then sends the RRC signaling message to the terminal device (the RRC signaling message sent by the CU to the terminal device needs to be forwarded by the DU). The process may be performed before the terminal device performs a handover for the first time, so that when the terminal device performs a subsequent handover, an access network device does not need to reconfigure a measurement configuration of the candidate cell, the terminal device can directly perform measurement and reporting of a neighboring cell in the target cell, and the access network device can quickly learn of a channel state information of the neighboring cell. The process may alternatively be performed after the terminal device performs a handover. The access network device reconfigures the measurement configuration of the candidate cell. In the reconfiguration process, only the measurement configuration (a first configuration) needs to be updated, and a second configuration does not need to be updated. This can reduce reconfiguration signaling overheads.

For the first measurement result that needs to be reported in the source cell, in a possible implementation, there is no association relationship between the to-be-measured reference signal resource of the candidate cell and the radio resource that is of the source cell and that is used for measurement and reporting. In this case, the terminal needs to explicitly indicate, in the reported measurement result, identification information of the measured candidate cell, identification information of the measured reference signal, and the measurement result, so that the access network device learns of, through differentiation, a measured object corresponding to the measurement result. For example, the terminal device sends a measurement report on a physical uplink control channel/using uplink control information. The measurement report includes the identification information of the measured candidate cell, the identification information of the measured reference signal, and the measurement result.

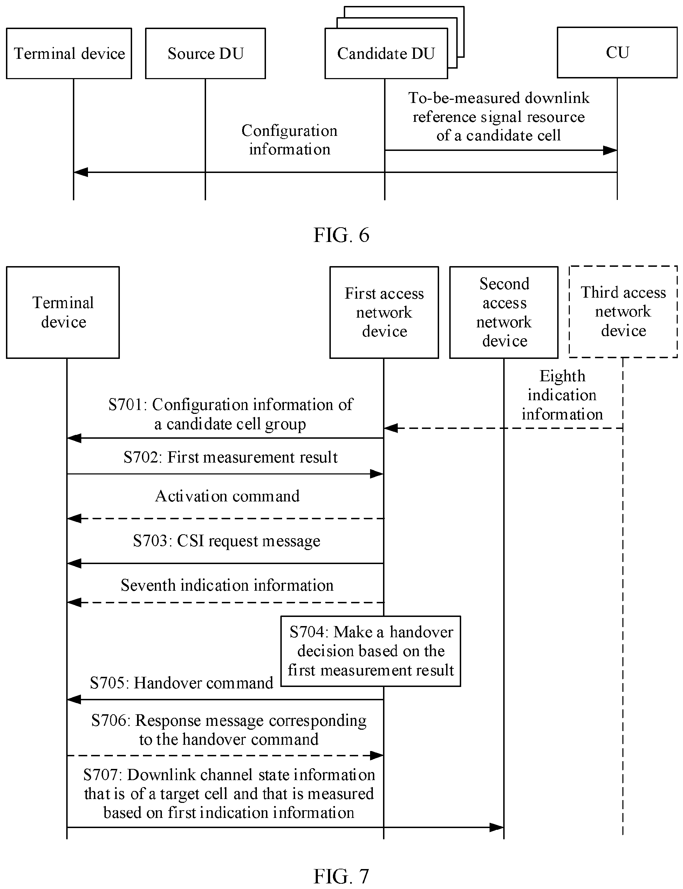

Alternatively, as shown in FIG. 6, (2) for the second measurement result that needs to be reported on the radio resource of the target cell, if the candidate DU associates the to-be-measured reference signal resource of the candidate cell with a radio resource of the candidate cell, the candidate DU may send second resource configuration information to the CU. The second resource configuration information may include the to-be-measured reference signal resource of the candidate cell, the radio resource, and the association relationship between the to-be-measured reference signal resource and the radio resource. The CU generates a complete RRC signaling message and then sends the complete RRC signaling message to the terminal device. The RRC signaling may include the third indication information. If the candidate DU does not associate the to-be-measured reference signal resource of the candidate cell with the radio resource of the candidate cell, the candidate DU may send the to-be-measured reference signal resource of the candidate cell to the CU, and the CU generates the complete RRC signaling message and then sends the complete RRC signaling message to the terminal device. The RRC signaling may include the third indication information.

It should be understood that the CU-DU separated architecture is merely used as an example to describe a transmission manner of the measurement configuration information, and a format of the RRC signaling message that carries the measurement configuration information is not limited. During actual application, the RRC signaling message may include a newly added signaling field. The newly added signaling field indicates the association relationship between the to-be-measured reference signal resource of the candidate cell and the corresponding uplink radio resource used to report the measurement result. Alternatively, in the RRC signaling message, a known signaling field may be reused, to indicate the association relationship between the to-be-measured reference signal resource of the candidate cell and the corresponding uplink radio resource used to report the measurement result. The format of the RRC signaling message is not limited in embodiments of this application. In addition, the CU-DU interaction procedures shown in FIG. 5 and FIG. 6 may be decoupled from another method embodiment in this application, and are used in a preconfiguration process of a cell handover technology.

S402: The terminal device performs measurement based on the received measurement configuration information, and reports the first measurement result (measurement report) to the first access network device on the radio resource of the source cell. Correspondingly, the first access network device receives the first measurement result from the terminal device.

For example, the first measurement result may be an L1 measurement result, including at least one of the following: an L1 measurement result of the source cell and an L1 measurement result of the at least one candidate cell. The L1 measurement result of the source cell and/or the L1 measurement result of the candidate cell may be cell-level measurement results/a cell-level measurement result, for example, cell-level RSRPs/a cell-level RSRP, or may be beam-level measurement results/a beam-level measurement result, for example, beam-level RSRPs/a beam-level RSRP. This is not limited in embodiments of this application.

S403: The first access network device sends a CSI request message to the terminal device. Correspondingly, the terminal device receives the CSI request message from the first access network device.

For example, the CSI request message may include first indication information. The first indication information may indicate the terminal device to measure a downlink channel state of the at least one candidate cell (or the first indication information may indicate the terminal device to measure a downlink channel state for the downlink reference signal of the at least one candidate cell). For example, the first indication information may include identification information of each to-be-measured downlink reference signal. The identification information may be a unique identifier of the downlink reference signal. Alternatively, for example, the first indication information may include identification information of each candidate cell and identification information of a to-be-measured downlink reference signal of each candidate cell. The identification information of the candidate cell and the identification information of the downlink reference signal may be used as 2-tuple information, to uniquely identify the to-be-measured downlink reference signal.

Optionally, the CSI request message may further include the third indication information. The third indication information may indicate the association relationship between the downlink reference signal of the at least one candidate cell and the uplink radio resource of the source cell, and/or indicate the association relationship between the downlink reference signal of the at least one candidate cell and an uplink radio resource of the at least one candidate cell. It should be understood that, if the configuration information in step S401 already includes the third indication information, the CSI request message may not include the third indication information; or if the configuration information in step S401 does not include the third indication information, the CSI request message may include the third indication information. During specific implementation, the CSI request message may be carried in an L2 message that may be, for example, a MAC CE. Alternatively, the CSI request message may be carried in an L1 message that may be, for example, a PDCCH message. An implementation of the CSI request message is not limited in embodiments of this application.

In a possible implementation, after S402, the first access network device may perform analysis based on the first measurement result from the terminal device, to determine a first candidate cell that meets a condition in the at least one candidate cell. For example, the first measurement result includes an RSRP. For example, the condition may include that the RSRP is greater than or equal to a first threshold. In other words, if an RSRP of a candidate cell is greater than or equal to the first threshold, it indicates that signal quality of the candidate cell is good, and there is a high probability that the candidate cell is determined as the target cell. Therefore, the candidate cell may be used as the first candidate cell. The first access network device may further determine a beam direction (for example, a TCI state 1) that needs to be used by the terminal device in the first candidate cell. When S403 is implemented, the CSI request message may further indicate the terminal device to measure a to-be-measured downlink reference signal associated with the TCI state 1 of the first candidate cell, indicating that the terminal device needs to measure the to-be-measured downlink reference signal associated with the TCI state 1 of the first candidate cell. For example, the to-be-measured downlink reference signal associated with the TCI state 1 of the first candidate cell may be a CSI-RS 1. Correspondingly, the terminal device may obtain downlink CSI, including but not limited to a PMI, CQI, an RI, or the like, of the first candidate cell by measuring the CSI-RS 1 of the first candidate cell.

In this embodiment of this application, the CSI request message may be implemented in at least one manner. Details are as follows:
Manner (1): The CSI request message is an independent message.

As the independent message, the CSI request message may include the first indication information described above. Alternatively, the CSI request message may include the first indication information, the third indication information, and the like that are described above. For details, refer to the foregoing related descriptions. Details are not described herein again.

Manner (2): The CSI request message and activation indication information from the first access network device may be combined and carried in a same message that is referred to as an activation command and represented as a second message.

In this embodiment of this application, the activation indication information indicates the terminal device to activate a TCI state associated with the downlink reference signal of the at least one candidate cell. In this case, when the first access network device subsequently further indicates a target TCI state used by the terminal device, if the target TCI state is previously in an active state, it indicates that the terminal device previously already measures a reference signal associated with the target TCI state that is in the active state, and may keep tracking time-frequency synchronization of the reference signal. The terminal device can be quickly switched to a beam direction corresponding to the target TCI state, and switching duration is short.

For example, the TCI state is associated with a CSI-RS of the candidate cell. Signaling content corresponding to the activation indication information may be shown in the following Table 1.

**Table 1**

| |
|---|
| TCI state 1 (candidate cell 1, CSI-RS 1) |
| TCI state 2 (candidate cell 1, CSI-RS 2) |
| ... |
| TCI state 8 (candidate cell 2, CSI-RS 1) |

The signaling content corresponding to the activation indication information in Table 1 shows that the terminal device needs to activate eight TCI states. Identification information of the eight TCI states is separately associated with a reference signal (for example, a CSI-RS or an SSB) of a candidate cell. It should be understood that the signaling content shown in Table 1 may also have another variation. For example, TCI states of the source cell and the candidate cell may be activated together in same activation indication information. The eight TCI states indicated in the signaling content include two TCI states associated with reference signals of the source cell, and the other six TCI states associated with reference signals of the candidate cell. The signaling content and a format that correspond to the activation indication information are not limited in embodiments of this application.

In this embodiment of this application, that the first indication information indicates the terminal device to measure a downlink channel state for the downlink reference signal of the at least one candidate cell may specifically include: The first indication information and the activation indication information indicate the terminal device to measure the downlink channel state for the downlink reference signal of the at least one candidate cell.

For example, the TCI state is associated with the CSI-RS of the candidate cell. When the CSI request message and the activation indication information in this embodiment of this application are combined and carried in the same message, the signaling content shown in Table 1 may be adjusted to that shown in Table 2.

**Table 2**

| | | | | | | | |
|---|---|---|---|---|---|---|---|
| CSI 8 | CSI 7 | CSI 6 | CSI 5 | CSI 4 | CSI 3 | CSI 2 | CSI 1 |
| TCI state 1 (candidate cell 1, CSI-RS 1) | | | | | | | |
| TCI state 2 (candidate cell 1, CSI-RS 2) | | | | | | | |
| ... | | | | | | | |
| TCI state 8 (candidate cell 2, CSI-RS 1) | | | | | | | |

In Table 2, fields CSI 1 to CSI 8 carried in the activation command may be considered as the first indication information. The fields CSI 1 to CSI 8 are respectively associated with identification information of one to-be-activated TCI state. For example, the field CSI 1 is associated with the TCI state 1, the field CSI 2 is associated with the TCI state 2, ..., and the field CSI 8 is associated with the TCI state 8. Specific values (for example, 0 or 1) carried in the field CSI 1 to CSI 8 indicate whether CSI measurement is performed on a reference signal associated with a corresponding TCI state. For example, when the field CSI 1 is set to 1, it indicates that CSI measurement needs to be performed on the reference signal associated with the TCI state 1, and when the field CSI 2 is set to 0, it indicates that CSI measurement does not need to be performed on a reference signal associated with the TCI state 2. Another field CSI has the same function.

In another possible implementation, CSI measurement may be not suitable for a reference signal associated with the to-be-activated TCI state. Signaling content of the activation command is shown in Table 3.

**Table 3**

| | | | | | | | |
|---|---|---|---|---|---|---|---|
| CSI 8 | CSI 7 | CSI 6 | CSI 5 | CSI 4 | CSI 3 | CSI 2 | CSI 1 |
| TCI state 1 (candidate cell 1, CSI-RS 1) | | | | | | | |
| TCI state 2 (candidate cell 1, CSI-RS 2) | | | | | | | |
| TCI state 3 (candidate cell 1, SSB 1) | | | | | | | |
| ... | | | | | | | |
| TCI state 8 (candidate cell 2, CSI-RS 1) | | | | | | | |

As shown in Table 3, in the activation command, the TCI state 3 is associated with the SSB 1 of the candidate cell 1, but CSI measurement is not suitable for the SSB 1. In this case, the first access network device may set, to 0, the CSI 3 associated with the TCI state 3, to indicate that the terminal device does not need to perform CSI measurement on a reference signal associated with the TCI state 3. Alternatively, the terminal device may actively ignore a meaning of a field CSI 3, and no longer perform CSI measurement on the reference signal associated with the TCI state 3.

In another possible implementation, when the CSI request message and the activation indication information in this embodiment of this application are combined and carried in the same message, in the activation command, measurement control on reference signals of all to-be-activated TCI states may be implemented using one general control field (for example, 1 bit). The signaling content of the activation command may be adjusted to that shown in Table 4.

**Table 4**

| |
|---|
| CSI 1 |
| TCI state 1 (candidate cell 1, CSI-RS 1) |
| TCI state 2 (candidate cell 1, CSI-RS 2) |
| ... |
| TCI state 8 (candidate cell 2, CSI-RS 1) |

In Table 4, the field CSI 1 is used as the general control field and is associated with the eight to-be-activated TCI states. When the field CSI 1 is set to 1, it indicates that CSI measurement needs to be performed on reference signals associated with the eight to-be-activated TCI states. When the field CSI 1 is set to 0, it indicates that CSI measurement does not need to be performed on the reference signals associated with the eight to-be-activated TCI states.

In another possible implementation, the activation command may not include the fields CSI 1 to CSI 8. To be specific, the terminal device does not need to be explicitly indicated whether to perform CSI measurement on reference signals associated with some to-be-activated TCI states. Instead, it may be agreed on in a protocol that, after receiving the activation command, the terminal device is required by default to perform CSI measurement on all the reference signals associated with the to-be-activated TCI states. In this case, for the signaling content of the activation command, refer to Table 1. Details are not described herein again. It should be understood that, if there are a plurality of types of reference signals (for example, SSBs) associated with to-be-activated TCI states indicated in a same activation command, the terminal device does not perform CSI measurement on reference signals other than the CSI-RS when CSI measurement is not suitable for the reference signals. For details, refer to related descriptions of Table 3. Details are not described herein again.

It should be understood that, in this embodiment of this application, when the CSI request message is used as the independent message, the CSI request message may be sent after a message in which the activation indication information is carried and before a message in which a handover indication information is carried. The terminal device may receive the CSI request message after receiving the activation indication information from the first access network device, to measure a downlink channel state of a part or all of the at least one candidate cell in advance before the cell handover is performed.

Manner (3): The CSI request message and handover indication information from the first access network device may be combined and carried in a same message that is referred to as a handover (handover, HO) and represented as a third message. The following describes the case in detail with reference to S405. Details are not described herein.

S404: The first access network device makes a handover decision (decision) based on the first measurement result from the terminal device, and determines the target cell from the at least one candidate cell.

For example, the first access network device may determine, as the target cell based on the first measurement result, a candidate cell whose signal quality is better than that of the source cell. If a quantity of candidate cells whose signal quality is better than that of the source cell is greater than 1, the first access network device may determine, as the target cell, a candidate cell whose signal quality is best.

It should be understood that, in this embodiment of this application, a sequence of performing S403 and S404 is not limited. S403 may be performed before S404, or S404 may be performed before S403. If S404 is performed before S403, because the target cell is already determined in S404, content of each piece of indication information in the CSI request message exchanged in S403 needs to be adaptively replaced with information related to the target cell. For example, the first indication information in the CSI request message needs to be adjusted to indicate the terminal device to measure a downlink channel state of a reference signal of the target cell. For another example, the third indication information in the CSI request message needs to be adjusted to indicate an association relationship between a to-be-measured downlink reference signal of the target cell and the radio resource of the source cell, and/or indicate an association relationship between the to-be-measured downlink reference signal of the target cell and the radio resource of the target cell. For another example, the activation indication information associated with the CSI request message needs to be adjusted to indicate the terminal device to measure a downlink reference signal associated with a TCI state of the target cell, indicating that the terminal device needs to measure the to-be-measured downlink reference signal associated with the TCI state of the target cell.

S405: The first access network device sends a handover command to the terminal device, where the handover command indicates the terminal device to perform the handover from the source cell to the target cell. Correspondingly, the terminal device receives the handover command from the first access network device.

In this embodiment of this application, the handover command may be carried in an L1 signaling message and/or an L2 signaling message.

In a possible implementation, if the first access network device implements the CSI request message in Manner (1) or Manner (2) described above, the handover command is a second indication information. For example, the second indication information may include identity information of the target cell. In an optional implementation, the handover command may further include beam direction information that needs to be used when the terminal device communicates with the target cell.

In another possible implementation, if the first access network device implements the CSI request message in Manner (3) described above, that is, the CSI request message in S403 and the handover indication information (namely, a second indication information) from the first access network device are combined and carried in the same message that is referred to as the handover command, the handover command may include the handover indication information and the first indication information. The handover indication information may include identity information of the target cell. Optionally, the handover indication information may further include target beam direction information (for example, the target TCI state) that needs to be used when the terminal device communicates with the target cell.

In another possible implementation, similar to the activation command described above and obtained by combining the CSI request message with the activation indication information, the handover command obtained by combining the CSI request message with the handover indication information may not explicitly indicate the terminal device whether to perform CSI measurement on a reference signal associated with a target beam direction, but implicitly indicates the terminal device whether to perform CSI measurement on the reference signal associated with the target beam direction. For example, it may be agreed on in a protocol that, after receiving the handover command, the terminal device is required by default to perform CSI measurement on the reference signal associated with the target beam direction (for example, the target TCI state) indicated by the handover command. Similar to that in the case described above in Table 3, if the reference signal associated with the target TCI state is not a CSI-RS and CSI measurement is not suitable for the reference signal, for example, the target TCI state is associated with an SSB, and CSI measurement is not suitable for the SSB, the terminal device does not need to perform CSI measurement on the reference signal associated with the target TCI state.

S406 (an optional step): The terminal device sends a response message corresponding to the handover command to the first access network device, where the response message indicates whether the terminal device successfully receives the handover command in S405.

S407: The terminal device performs the handover from the source cell to the target cell, and sends uplink information to the second access network device on a radio resource of the target cell, where the uplink information may include downlink channel state information of the target cell, and the downlink channel state information of the target cell is obtained by measuring the downlink reference signal of the target cell based on the first indication information.

In this embodiment of this application, according to the foregoing related descriptions, after receiving the CSI request message from the first access network device, the terminal device performs, based on the indication information in the CSI request message, CSI measurement on to-be-measured downlink reference signals associated with a plurality of TCI states. However, the to-be-measured downlink reference signals associated with these TCI states may not correspond to a same cell, or may not be reference signals corresponding to an optimal beam direction of a same cell. In a possible implementation, the terminal device does not need to report CSI of all the reference signals to the target cell. When S407 is implemented, the terminal device reports, to the second access network device based on the target TCI state indicated in the handover command, CSI of the reference signal associated with the target TCI state.

For example, if the terminal device already measures CSI of the TCI state 1 (for example, associated with the CSI-RS 1) and the TCI state 2 (for example, associated with the CSI-RS 2) of the candidate cell cell 1 before the terminal device performs the cell handover, and the handover command indicates that the target cell to which the terminal device performs the handover is the cell 1 and indicates the terminal device to communicate with the target cell in a beam direction of the TCI state 2, when S407 is implemented, after performing the handover to the target cell, the terminal device reports the CSI of the TCI state 2 to the second access network device on a radio resource of the target cell, and does not need to report the CSI of the TCI state 1 (CSI-RS 1).

It should be noted that, in this embodiment of this application, after performing the handover from the source cell to the target cell, the terminal device needs to report CSI of the target cell to the second access network device as early as possible. For example, the terminal device may include the CSI of the target cell in a 1^{st} uplink message sent to the second access network device. In a possible implementation, the CSI request message may further include fourth indication information. The fourth indication information indicates the terminal device to report the downlink channel state information of the target cell to the target cell after the terminal device performs the handover to the target cell. In other words, the fourth indication information may be used as start information for the terminal device to report the CSI to the target cell. Therefore, the second access network device can learn of the downlink channel state information of the target cell as early as possible, to perform data transmission scheduling more appropriately based on the downlink channel state information of the target cell as early as possible, so as to improve a data transmission capacity.

To ensure that the second access network device learns in time whether the terminal device reports the downlink channel state information of the target cell, in a possible implementation, when S407 is implemented, the terminal device may further send fifth indication information to the second access network device on a radio resource of the target cell. The fifth indication information may indicate whether the uplink information includes the downlink channel state information of the target cell. The fifth indication information may be explicit information. For example, in the uplink message that carries the downlink channel state information of the target cell, a 1-bit information field may be used to explicitly indicate whether the uplink message includes the downlink channel state information of the target cell. Alternatively, the fifth indication information may be implicit information. For example, the uplink message that carries the downlink channel state information of the target cell may include dedicated signaling for reporting the CSI. The second access network device learns, based on the dedicated signaling, that the uplink message includes the downlink channel state information of the target cell. A specific MAC CE is used to carry the downlink channel state information, so that the second access network device can learn, based on the MAC CE in the uplink message, that the uplink message includes the downlink channel state information of the target cell. An implementation of the fifth indication information is not limited in embodiments of this application.

Therefore, based on the fifth indication information, the second access network device can learn that the terminal device already measures the CSI of the target cell in advance. In one aspect, the second access network device can parse the received uplink message in time to obtain the downlink channel state information of the target cell, to perform data transmission scheduling based on the downlink channel state information of the target cell. In another aspect, the second access network device does not need to indicate the terminal device to measure the CSI of the target cell, which helps reduce the signaling overheads.

So far, the communication method applied when the terminal device performs the handover from the single source cell to the single target cell is described in detail with reference to FIG. 4 to FIG. 6. In the method, the first access network device can flexibly indicate the terminal device to perform CSI measurement on some reference signals of the candidate cell in advance. In this way, after performing the handover to the target cell, the terminal device can provide a report to the second access network device as early as possible. The downlink channel state information of the target cell is provided to the second access network device, to help the second access network device sense accurate CSI information in time in an initial phase in which the terminal device performs the handover to the target cell, so that the second access network device performs uplink and downlink data transmission scheduling on the terminal device in a good scheduling manner. This improves the data transmission capacity between the terminal device and the target cell.

Scenario 2: A terminal device performs a handover from a source cell (group) to a target cell group (group).

In Scenario 2, whether a source in which the terminal device is located is a single source cell or a source cell group is not limited in embodiments of this application. If the source is a source cell group, a quantity of source cells in the source cell group is an integer greater than 1, and the source cell group may include one primary cell and at least one secondary cell. A target to which the terminal device performs the handover is a target cell group, and the target cell group may include one primary cell and at least one secondary cell. After the terminal device completes a cell handover, the primary cell and/or the secondary cell in the target cell group are/is used as serving cells/a serving cell, and establish/establishes communication connections/a communication connection to the terminal device. At least two cells in the source cell group/target cell group may communicate with the terminal device in a CA manner, or may communicate with the terminal device in a DC or CoMP manner. A multi-cell communication technology of the source cell group/target cell group is not limited in embodiments of this application. Details are not described herein again.

As shown in FIG. 7, in Scenario 2, the communication method may include the following steps.

S701: A first access network device sends configuration information of at least one candidate cell group to the terminal device. Correspondingly, the terminal device receives the configuration information from the first access network device.

In this embodiment of this application, one or more (for example, N, where N is an integer greater than or equal to 1) preconfigured (preconfigured) candidate cell groups may exist, and each candidate cell group may include one or more candidate cells. Grouping of the cell in the candidate cell group may be fixed or non-fixed.

For example, the source cell group of the terminal device includes a primary cell cell 0 and a secondary cell cell 1. Configuration manners of the candidate cell group may be as follows:
(1) Configuration manner 1: Grouping is fixed. A primary cell and the secondary cell that are included in each candidate cell group are fixed.
   Candidate cell group 1: cell 1 and cell 2, where the cell 1 is a primary cell, and the cell 2 is a secondary cell.
   Candidate cell group 2: cell 2 and cell 3, where the cell 2 is a primary cell, and the cell 3 is a secondary cell.
   Candidate cell group 3: cell 2 and cell 0, where the cell 2 is a primary cell, and the cell 0 is a secondary cell.
   Candidate cell group 4: cell 0 and cell 2, where the cell 0 is a primary cell, and the cell 2 is a secondary cell.
(2) Configuration manner 2: Grouping is non-fixed. At least one candidate cell may be considered as a same candidate cell group. A combination of any two or more candidate cells in the candidate cell group may become the target cell group. For example, the candidate cell group may include a cell 1, a cell 2, and a cell 3.

For the foregoing two configuration manners, the configuration information may include first configuration information and second configuration information of any candidate cell. Similar to that in the foregoing descriptions of S401, the first configuration information includes configuration content that needs to be read/loaded/effective when the terminal device is in the source cell. The second configuration information includes configuration content that needs to be read/loaded/effective after the terminal device performs a handover to a corresponding target cell when the candidate cell is used as the target cell. For content of the configuration information, refer to the foregoing related descriptions with reference to S401. Details are not described herein again.

In this embodiment of this application, when a cell group is related, the cell handover performed by the terminal device may include the following two possible handover cases.

In a 1^{st} possible cell handover case, it is considered as a handover only when the primary cell of the terminal device is changed. In this case, if the first access network device sends the configuration information to the terminal device in Configuration manner 1, the configuration information does not include configuration information related to the candidate cell group 4. In a possible implementation, because in Configuration manner 1, a primary cell and a secondary cell in a different candidate cell group may be fixed, measurement configuration information included in the configuration information may include only a measurement-related configuration of the primary cell, and does not need to include a measurement-related configuration of the secondary cell. This helps reduce signaling overheads. If the first access network device sends the configuration information to the terminal device in Configuration manner 2, because grouping is non-fixed, the measurement configuration information included in the configuration information needs to include measurement-related configurations of all candidate cells in the candidate cell group.

In a 2^{nd} possible cell handover case, it is considered as a handover when any cell in the target cell group is different from a cell in the source cell group (including a change of a role of the primary cell or the secondary cell). In this case, if the first access network device sends the configuration information to the terminal device in Configuration manner 1, the configuration information may include configuration information related to the candidate cell group 1 to the candidate cell 4. Regardless of whether the first access network device sends the configuration information to the terminal device in Configuration manner 1 or Configuration manner 2, measurement configuration information included in the configuration information needs to include measurement-related configurations of all indicated candidate cells. Correspondingly, when being required subsequently, the terminal device may report related measurement results of the primary cell and the secondary cell of the target to the second access network device, to improve a data transmission capacity in the CA manner.

In this embodiment of this application, the configuration information may further indicate an association relationship between the source cell and the candidate cell, to optimize a measurement process of the terminal device, so as to quickly complete measurement, and reduce interruption impact on the source cell. For example, the association relationship between the source cell and the candidate cell may be an intra-frequency association relationship. For example, the source cell group of the terminal device includes the cell 0 (a primary cell) and the cell 1 (a secondary cell). If the candidate cell group 2 includes the cell 2 and the cell 3, and the cell 2 and the cell 1 are intra-frequency, the measurement configuration information may indicate an association relationship between the cell 2 and the cell 1. For example, measurement configuration information of the cell 2 is associated with measurement configuration information of the cell 1. Further, when measuring the candidate cell, the terminal device may measure the cell 2 using hardware such as a radio frequency unit in the cell 1. The cell 2 and the cell 1 are intra-frequency. Therefore, the hardware such as the radio frequency unit can quickly complete measurement without switching a frequency. This reduces the interruption impact on the source cell. Similarly, if the cell 3 and the cell 0 are intra-frequency, the measurement configuration information may indicate an association relationship between the cell 3 and the cell 0, and measurement may also be quickly completed without switching a frequency. This reduces the interruption impact on the source cell.

It should be understood that, in this embodiment of this application, the association relationship between the source cell and the candidate cell may be explicitly indicated or implicitly indicated. In a case of the implicit indication, for example, the terminal device may determine, based on related information such as a frequency in a configuration of the candidate cell, whether a candidate cell and a source cell are intra-frequency, and when a candidate cell and the source cell are intra-frequency, may further measure the intra-frequency candidate cell using hardware such as a radio frequency unit in the intra-frequency source cell. In this way, measurement can be quickly completed without switching a frequency, to reduce the interruption impact on the source cell.

In a possible implementation, when the candidate cell groups are managed in Configuration manner 1, N is used to represent a quantity of the candidate cell groups, and an access network device that manages the N candidate cell groups is represented as a third access network device. In this case, before S701 is implemented, the first access network device may receive eighth indication information from the third access network device. The eighth indication information indicates a primary cell and at least one secondary cell in each of the N candidate cell groups. Further, when the first access network device sends the configuration information to the terminal device when implementing S701, the measurement configuration information included in the configuration information may include measurement-related configurations of primary cells in the N candidate cell groups, and does not need to include measurement-related configurations of secondary cells. This helps reduce the signaling overheads.

In a possible implementation, the first access network device may send seventh indication information to the terminal device on a radio resource of the source cell based on the eighth indication information. The seventh indication information may indicate the terminal device to send, to the second access network device, downlink channel state information obtained by measuring, based on first indication information, a downlink reference signal of the primary cell in the target cell group to which the target cell belongs, and the target cell includes the primary cell in the target cell group; or the seventh indication information indicates the terminal device to send, to the second access network device, downlink channel state information obtained by measuring, based on the first indication information, downlink reference signals of the primary cell and the at least one secondary cell in the target cell group to which the target cell belongs, and the target cell includes the primary cell and/or the secondary cell in the target cell group. In this case, that second indication information indicates the terminal device to perform the handover from the source cell to the target cell specifically includes: The second indication information indicates the terminal device to perform the handover from the source cell to the primary cell in the target cell group, or the second indication information indicates the terminal device to perform the handover from the source cell to the primary cell or the secondary cell in the target cell group.

It should be understood that, during specific implementation, sending of the seventh indication information is an optional step. For example, the first access network device may not send the seventh indication information to the terminal device if the terminal device and the first access network device have agreed to use the 1^{st} possible cell handover case or the 2^{nd} possible cell handover case to perform the cell handover. The first access network device may send the seventh indication information to the terminal device if the terminal device and the first access network device do not agree whether to use the 1^{st} possible cell handover case or the 2^{nd} possible cell handover case to perform the cell handover. In a possible implementation, the seventh indication information and the first indication information may be carried in a same message. S702: The terminal device performs measurement based on the received measurement configuration information, and reports a first measurement result (measurement report) to the first access network device on a radio resource of the source cell. Correspondingly, the first access network device receives the first measurement result from the terminal device.

The first measurement result includes measurement results of a primary cell and a secondary cell in any candidate cell group, or the first measurement result includes a first measurement result of the primary cell in any candidate cell group. For reported content, refer to related descriptions of S402. Details are not described herein again.

It may be understood that a message that carries the configuration information of the at least one candidate cell group may be the first message described above.

S703: The first access network device sends a CSI request message to the terminal device. Correspondingly, the terminal device receives the CSI request message from the first access network device.

For example, the CSI request message may include the first indication information. The first indication information may indicate the terminal device to measure a downlink channel state of at least one candidate cell (including a candidate cell in at least one candidate cell group configured in Configuration manner 1 or a candidate cell configured in Configuration manner 2). In other words, the first indication information may indicate the terminal device to measure a downlink channel state for the downlink reference signal of the at least one candidate cell (including the candidate cell in the at least one candidate cell group configured in Configuration manner 1 or the candidate cell configured in Configuration manner 2). For example, the first indication information may include identification information of each to-be-measured downlink reference signal. The identification information may be a unique identifier of the downlink reference signal. Alternatively, for example, the first indication information may include identification information of each candidate cell and identification information of a to-be-measured downlink reference signal of each candidate cell. The identification information of the candidate cell and the identification information of the downlink reference signal may be used as 2-tuple information, to uniquely identify the to-be-measured downlink reference signal.

Optionally, the CSI request message may further include third indication information. The third indication information may indicate an association relationship between the downlink reference signal of the at least one candidate cell and an uplink radio resource of the source cell, and/or indicate an association relationship between the downlink reference signal of the at least one candidate cell and an uplink radio resource of the at least one candidate cell. It should be understood that, if the configuration information in step S401 already includes the third indication information, the CSI request message may not include the third indication information; or if the configuration information in step S401 does not include the third indication information, the CSI request message may include the third indication information. During specific implementation, the CSI request message may be carried in an L2 message that may be, for example, a MAC CE. Alternatively, the CSI request message may be carried in an L1 message that may be, for example, a PDCCH message. An implementation of the CSI request message is not limited in embodiments of this application.

In a possible implementation, after S702, the first access network device may perform analysis based on the first measurement result from the terminal device, to determine a first candidate cell group that meets a condition in the at least one candidate cell group. For example, the first measurement result includes an RSRP. For example, the condition may include that the RSRP is greater than or equal to a second threshold. In other words, if an RSRP of a candidate cell group is greater than or equal to the second threshold, it indicates that signal quality of the candidate cell group is good, and there is a high probability that the candidate cell group is determined as the target cell group. Therefore, the candidate cell group may be used as the first candidate cell group. The first access network device may further determine a beam direction (for example, a TCI state 1) that needs to be used by the terminal device in the first candidate cell group. When S703 is implemented, the CSI request message may further indicate the terminal device to measure to-be-measured downlink reference signals/a to-be-measured downlink reference signal associated with TCI states 1/a TCI state 1 of a primary cell and/or a secondary cell in the first candidate cell group, indicating that the terminal device needs to measure a to-be-measured downlink reference signal associated with the TCI state 1 of the first candidate cell. For example, the to-be-measured downlink reference signal associated with the TCI state 1 of the first candidate cell may be a CSI-RS 1. Correspondingly, the terminal device may obtain downlink CSI, including but not limited to a PMI, CQI, an RI, or the like, of the first candidate cell by measuring the CSI-RS 1 of the first candidate cell.

Similar to that in Scenario 1, in Scenario 2, the CSI request message may be implemented in at least one manner. Details are as follows:
Manner (1): The CSI request message is an independent message. For detailed descriptions, refer to the foregoing related descriptions with reference to Scenario 1. Details are not described herein again.
Manner (2): The CSI request message and activation indication information from the first access network device may be combined and carried in a same message that is referred to as an activation command and represented as a second message.

If the first access network device sends the activation command to the terminal device in Configuration manner 1 in S701, in a possible implementation, the activation indication information carried in the activation command may be used to activate TCI states of a plurality of candidate cell groups. For each candidate cell group, only a TCI state of a primary cell (PCell) may be activated. The activation command may further include first indication information, indicating a to-be-measured downlink reference signal to the terminal device. For example, signaling content in which the activation indication information and the CSI request message are combined may be shown in Table 5.

**Table 5**

| | |
|---|---|
| Candidate cell group identifier | |
| CSI | TCI state 1 (C1, CSI-RS 1) |
| Candidate cell group identifier | |
| CSI | TCI state 2 (C2, CSI-RS 2) |
| ... | |

If the first access network device sends the activation command to the terminal device in Configuration manner 1 in S701, in another possible implementation, the activation indication information in the activation command may be used to activate TCI states of a plurality of candidate cells (including a primary cell and a secondary cell) in one candidate cell group. The CSI request message in the activation command may indicate a to-be-measured downlink reference signal to the terminal device. For example, signaling content in which the activation indication information and the CSI request message are combined is shown in Table 6.

**Table 6**

| | | | | | | | |
|---|---|---|---|---|---|---|---|
| Candidate cell group identifier | | | | | | | |
| C8 | C7 | C6 | C5 | C4 | C3 | C2 | C1 |
| CSI 8 | CSI 7 | CSI 6 | CSI 5 | CSI 4 | CSI3 | CSI2 | CSI 1 |
| TCI state 1 (C1, CSI-RS 1) | | | | | | | |
| TCI state 2 (C2, CSI-RS 2) | | | | | | | |
| ... | | | | | | | |
| Candidate cell group identifier | | | | | | | |
| C8 | C7 | C6 | C5 | C4 | C3 | C2 | C1 |
| CSI 8 | CSI 7 | CSI 6 | CSI 5 | CSI 4 | CSI3 | CSI2 | CSI 1 |
| TCI state 1 (C1, CSI-RS 1) | | | | | | | |
| TCI state 2 (C2, CSI-RS 2) | | | | | | | |
| ... | | | | | | | |

In Table 6, the candidate cell group identifier (candidate group ID) represents an identity of the preconfigured candidate cell group. A field Ci (i=1, 2, ..., 8) indicates an identity of a candidate cell in a candidate cell group, and the field Ci is set to 1, indicating that a TCI state of a candidate cell whose identifier is i in a candidate cell group needs to be activated. Fields CSI 1 to CSI 8 are separately associated with a to-be-activated TCI state of a candidate cell. For example, the field CSI 1 is associated with a candidate cell C1 and the TCI state 1, the field CSI 2 is associated with a candidate cell C2 and the TCI state 2, ..., and the field CSI 8 is associated with a candidate cell C8 and a TCI state 8. Specific values (for example, 0 or 1) carried in the fields CSI 1 to CSI 8 indicate whether to perform CSI measurement on reference signals associated with corresponding to-be-activated TCI states. For example, when the field CSI 1 is set to 1, it indicates that CSI measurement needs to be performed on the reference signal associated with the TCI state 1, and when the field CSI 2 is set to 0, it indicates that CSI measurement does not need to be performed on a reference signal associated with the TCI state 2. Another field CSI has the same function.

It should be noted that, in Table 6, if a field Ci is set to 0, it indicates that CSI measurement does not need to be performed on a reference signal of a cell corresponding to the field Ci. Therefore, related information associated with the field Ci set to 0 in Table 6 needs to be deleted, indicating that any TCI state of the cell is not activated.

If the first access network device sends the activation command to the terminal device in Configuration manner 2 in S701, the activation indication information in the activation command may be used to activate a TCI state of at least one ungrouped candidate cell. The CSI request message in the activation command may indicate a to-be-measured downlink reference signal to the terminal device. Signaling content of the activation command is shown in Table 7.

**Table 7**

| | |
|---|---|
| Candidate cell identifier | |
| CSI | TCI state 1 (C1, CSI-RS 1) |
| Candidate cell identifier | |
| CSI | TCI state 2 (C2, CSI-RS 2) |
| ... | |

It should be understood that the foregoing is merely example descriptions of the signaling content of the activation command related in Scenario 2 and is not any limitation. In another embodiment, for example, in the 2^{nd} possible handover case described above, the signaling content shown in Table 5 is not applicable, but the activation command needs to be used to indicate to measure reference signals of primary cells and secondary cells of all the candidate cell groups indicated in S701.

It should be understood that, similar to that in the case described above in Table 3, in the cases shown in Table 5 to Table 7, if the reference signal associated with the to-be-activated TCI state is not a CSI-RS and CSI measurement is not suitable for the reference signal, for example, the TCI state is associated with an SSB, and CSI measurement is not suitable for the SSB, the terminal device does not need to perform CSI measurement on the reference signal associated with the TCI state.

Manner (3): The CSI request message and handover indication information from the first access network device may be combined and carried in a same message that is referred to as an activation command and represented as a third message. The following describes the case in detail with reference to S705. Details are not described herein.

S704: The first access network device makes a handover decision based on the first measurement result from the terminal device, and determines the target cell group from the at least one candidate cell group.

For example, the first access network device may determine, as the target cell group based on the first measurement result, a candidate cell group whose signal quality is better than that of the source cell group. The first access network device may make the handover decision through comprehensive consideration based on of measurement results of a primary cell and a secondary cell in a candidate cell group. For example, if signal quality of primary cells in two candidate cell groups (for example, the candidate cell group 1 and the candidate cell group 2 described above) is the same or similar, but signal quality of the secondary cell in the candidate cell group 1 is better than signal quality of the secondary cell in the candidate cell 2, the first access network device may decide the candidate cell group 1 as the target cell group.

It should be understood that, in this embodiment of this application, a sequence of performing S703 and S704 is not limited. S703 may be performed before S704, or S704 may be performed before S703. If S704 is performed before S703, because the target cell group is already determined in S704, content of each piece of indication information in the CSI request message exchanged in S703 needs to be adaptively replaced with information related to the target cell group. For example, the first indication information in the CSI request message needs to be adjusted to indicate the terminal device to measure a downlink channel state of a downlink reference signal of a cell in the target cell group. For another example, the third indication information in the CSI request message needs to be adjusted to indicate an association relationship between a to-be-measured downlink reference signal of a cell in the target cell group and a radio resource of a cell in the source cell group, and/or indicate an association relationship between the to-be-measured downlink reference signal of the cell in the target cell group and a radio resource of the cell in the target cell group. For another example, the activation indication information associated with the CSI request message needs to be adjusted to indicate the terminal device to measure a to-be-measured downlink reference signal associated with a TCI state of a cell in the target cell group, indicating that the terminal device needs to measure the to-be-measured downlink reference signal associated with the TCI state of the cell in the target cell group.

S705: The first access network device sends a handover command to the terminal device, where the handover command indicates the terminal device to perform the handover from the source cell group to the target cell group. Correspondingly, the terminal device receives the handover command from the first access network device.

In this embodiment of this application, the handover command may be carried in an L1 signaling message and/or an L2 signaling message.

In a possible implementation, if the first access network device implements the CSI request message in Manner (1) or Manner (2) described above, the handover command is the second indication information. The second indication information may include identity information of the target cell group. In an optional implementation, the handover command may further include beam direction information that needs to be used when the terminal device communicates with the target cell group.

In another possible implementation, if the first access network device implements the CSI request message in Manner (3) described above, that is, if the CSI request message in S703 and the handover indication information (namely, the second indication information) from the first access network device are combined and carried in the same message that is referred to as the handover command, the handover command may include the handover indication information and the first indication information. The handover indication information may include identity information of the target cell group. Optionally, the handover indication information may further include target beam direction information (for example, the target TCI state) that needs to be used when the terminal device communicates with the target cell group.

In another possible implementation, similar to the activation command described above and obtained by combining the CSI request message with the activation indication information, the handover command obtained by combining the CSI request message with the handover indication information may not explicitly indicate the terminal device whether to perform CSI measurement on a reference signal associated with a target beam direction, but implicitly indicates the terminal device whether to perform CSI measurement on the reference signal associated with the target beam direction. For example, it may be agreed on in a protocol that, after receiving the handover command, the terminal device is required by default to perform CSI measurement on the reference signal associated with the target beam direction (for example, the target TCI state) indicated by the handover command. Similar to that in the case described above in Table 3, if the reference signal associated with the target TCI state is not a CSI-RS and CSI measurement is not suitable for the reference signal, for example, the target TCI state is associated with an SSB, and CSI measurement is not suitable for the SSB, the terminal device does not need to perform CSI measurement on the reference signal associated with the target TCI state.

S706 (an optional step): The terminal device sends a response message corresponding to the handover command to the first access network device, where the response message indicates whether the terminal device successfully receives the handover command in S705.

S707: The terminal device performs the handover from the source cell (group) to the target cell group, and sends uplink information to the second access network device on a radio resource of the target cell group, where the uplink information may include downlink channel state information of the target cell group, and the downlink channel state information of the target cell group is obtained by the terminal device by measuring the downlink reference signal of the target cell group based on the first indication information.

In this embodiment of this application, according to the foregoing related descriptions, after receiving the CSI request message from the first access network device, the terminal device performs, based on the indication information in the CSI request message, CSI measurement on to-be-measured downlink reference signals associated with a plurality of TCI states. However, the to-be-measured downlink reference signals associated with these TCI states may not correspond to a same cell group, or may not be reference signals corresponding to an optimal beam direction of a same cell group. In a possible implementation, the terminal device does not need to report CSI of all the reference signals to the target cell group. When S707 is implemented, the terminal device reports, to the second access network device based on the target TCI state indicated in the handover command, CSI of the reference signal associated with the target TCI state.

For example, if the terminal device already measures CSI of the TCI state 1 (for example, associated with the CSI-RS 1) and the TCI state 2 (for example, associated with the CSI-RS 2) of the candidate cell cell 1 before the terminal device performs the cell handover, and the handover command indicates that the target cell to which the terminal device performs the handover is the cell 1 and indicates the terminal device to communicate with the target cell in a beam direction of the TCI state 2, when S707 is implemented, after performing the handover to the target cell, the terminal device reports the CSI of the TCI state 2 to the second access network device on a radio resource of the target cell, and does not need to report the CSI of the TCI state 1 (CSI-RS 1).

In a possible implementation, the target cell may include the primary cell in the target cell group. When S707 is implemented, the terminal device may send the uplink information to the second access network device on an uplink radio resource of the primary cell in the target cell group. The uplink information may include the downlink channel state information of the primary cell in the target cell group.

It should be noted that, in this embodiment of this application, after performing the handover from the source cell (group) to the target cell group, the terminal device needs to report CSI of the target cell group to the second access network device as early as possible. For example, the terminal device may include the CSI of the target cell group in a 1^{st} uplink message sent to the second access network device. In a possible implementation, the CSI request message may further include fourth indication information. The fourth indication information indicates the terminal device to report the downlink channel state information of the target cell (group) to the target cell after the terminal device performs the handover to the target cell. In other words, the fourth indication information may be used as start information for the terminal device to report the CSI to the target cell. Therefore, the second access network device can learn of the downlink channel state information of the target cell group as early as possible, to perform data transmission scheduling more appropriately based on the downlink channel state information of the target cell group as early as possible, so as to improve a data transmission capacity. If the first access network device does not indicate the terminal device to report CSI of a target cell x to the second access network device, but the terminal device identifies that the target cell x is the primary cell or the secondary cell in the source cell group, and the terminal device obtains a CSI measurement result of the target cell x, the terminal device may actively include the CSI measurement result of the cell x in the uplink message in step S707.

In a possible implementation, the first access network device may indicate, in the handover command, that the target cell x of the terminal device is the primary cell or the secondary cell in the source cell group. In this case, the terminal device reserves the CSI measurement result of the cell x, and the terminal device may actively include the CSI measurement result of the cell x in the uplink message in step S707. In another possible implementation, the first access network device may indicate, in the handover command, that the target cell x of the terminal device is the primary cell or the secondary cell in the source cell group. In this case, the terminal device may maintain downlink synchronization and/or uplink synchronization information with the cell x. In a handover process, the terminal device and the target cell x are considered to be in a synchronization state, and do not need to re-perform a downlink synchronization process and/or an uplink synchronization process. This accelerates the cell handover process. In another possible implementation, the handover command does not need to explicitly indicate whether the target cell x is the primary cell or the secondary cell in the source cell group, but the terminal device may identify, based on cell information (for example, a physical cell identifier), that the cell x is the primary cell or the secondary cell in the source cell group. In this case, the terminal device may maintain downlink synchronization and/or uplink synchronization information with the cell x. In a handover process, the terminal device and the target cell x are considered to be in a synchronization state, and do not need to re-perform a downlink synchronization process and/or an uplink synchronization process. This accelerates the cell handover process.

To ensure that the second access network device learns in time whether the terminal device reports the downlink channel state information of the target cell group, in a possible implementation, when S707 is implemented, the terminal device may further send fifth indication information to the second access network device on a radio resource of the target cell group. The fifth indication information may indicate whether the uplink information includes the downlink channel state information of the target cell group. The fifth indication information may be explicit information. For example, in the uplink message that carries the downlink channel state information of the target cell group, a 1-bit information field may be used to explicitly indicate whether the uplink message includes the downlink channel state information of the target cell group. Alternatively, the fifth indication information may be implicit information. For example, the uplink message that carries the downlink channel state information of the target cell group may include dedicated signaling for reporting the CSI. The second access network device learns, based on the dedicated signaling, that the uplink message includes the downlink channel state information of the target cell. A specific MAC CE is used to carry the downlink channel state information, so that the second access network device can learn, based on the MAC CE in the uplink message, that the uplink message includes the downlink channel state information of the target cell group. An implementation of the fifth indication information is not limited in embodiments of this application.

Therefore, based on the fifth indication information, the second access network device can learn that the terminal device already measures the CSI of the target cell group in advance. In one aspect, the received uplink message can be parsed in time to obtain the downlink channel state information of the target cell group, to perform data transmission scheduling based on the downlink channel state information of the target cell group. In another aspect, the second access network device does not need to indicate the terminal device to measure the CSI of the target cell group, which helps reduce the signaling overheads.

So far, the communication method applied when the terminal device performs the handover to at least one target cell is described in detail with reference to FIG. 7. In the method, the first access network device can flexibly indicate the terminal device to perform CSI measurement on some reference signals of the at least one candidate cell group in advance. In this way, after performing the handover to the target cell group, the terminal device can provide a report to the second access network device as early as possible. The downlink channel state information of the target cell group is provided to the second access network device, to help the second access network device sense accurate CSI information in time in an initial phase in which the terminal device performs the handover to the target cell group, so that the second access network device performs uplink and downlink data transmission scheduling on the terminal device in a good scheduling manner. This improves the data transmission capacity between the terminal device and the target cell.

Scenario 3: When the terminal device performs a handover from a single source cell to a single target cell, or the terminal device performs a handover from a source cell (group) to a target cell group, a first access network device requests the terminal device to send an uplink reference signal (for example, an SRS) to a second access network device.

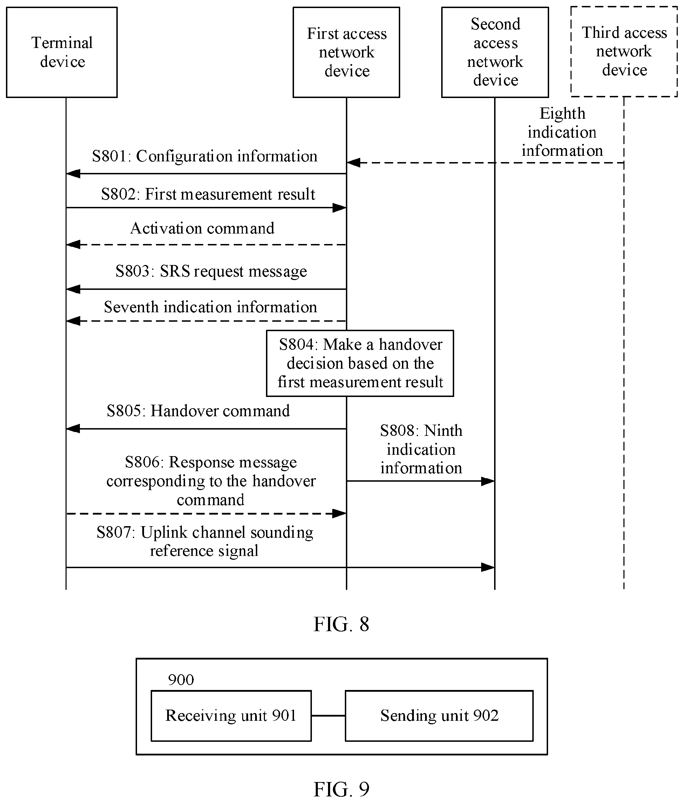

As shown in FIG. 8, in Scenario 3, the communication method may include the following steps.

S801: The first access network device sends configuration information of at least one candidate cell (group) to the terminal device. Correspondingly, the terminal device receives the configuration information from the first access network device.

Compared with those in Scenario 1 and Scenario 2, in Scenario 3, the configuration information may further include uplink reference signal configuration information of the candidate cell, for example, an SRS configuration, and may include at least one of the following: an SRS resource or resource set identifier, a time domain location, and a frequency domain location. For other detailed implementation details, refer to the foregoing related descriptions with reference to S401 or S701. Details are not described herein again.

S802: The terminal device performs measurement based on received measurement configuration information, and reports a first measurement result to the first access network device on a radio resource of the source cell. Correspondingly, the first access network device receives the first measurement result from the terminal device. For detailed implementation details, refer to the foregoing related descriptions with reference to S402 or S702. Details are not described herein again.

S803: The first access network device sends an SRS request message to the terminal device. Correspondingly, the terminal device receives the SRS request message from the first access network device.

For example, the SRS request message may include sixth indication information. The sixth indication information may indicate the terminal device to send an uplink channel sounding reference signal to the at least one candidate cell. For example, the sixth indication information may include identification information of each to-be-sent uplink channel sounding reference signal (for example, an identifier of an SRS resource or resource set). The identification information may be a unique identifier of the uplink channel sounding reference signal. Alternatively, for example, the sixth indication information may include identification information of each candidate cell and identification information of a to-be-sent uplink channel sounding reference signal of each candidate cell. The identification information of the candidate cell and the identification information of the uplink channel sounding reference signal may be used as 2-tuple information, to uniquely identify the to-be-sent uplink channel sounding reference signal. Optionally, the sixth indication information may further indicate a sending occasion of the uplink channel sounding reference signal. The sending occasion includes any one of the following: before the terminal device performs the cell handover, when the terminal device performs the cell handover, and after the terminal device performs the handover to the target cell. The terminal device may consider, as a start moment at which the terminal device performs a cell handover action, a moment at which a handover command from the first receiving network device is received, and consider, as a handover completion moment, a moment at which the terminal device accesses the target cell and starts to use a radio resource of the target cell to perform communicative interaction with the second access network device. A time period before the start moment is before the terminal device performs the cell handover. A time period between the start moment and the handover completion moment is when the terminal device performs the cell handover. After the handover completion moment, the terminal device completes the cell handover.

Similar to the CSI request message described above, the SRS request message may also include the following three implementations.

Manner (1): The SRS request message is an independent message.

Manner (2): The SRS request message and activation indication information from the first access network device may be combined and carried in a same message that is referred to as an activation command and represented as a fourth message.

Manner (3): The SRS request message and handover indication information (namely, second indication information) from the first access network device may be combined and carried in a same message that is referred to as a handover command and represented as a fifth message.

In the foregoing three implementations, a signaling format and content that correspond to the SRS request message may be the same as the signaling format and the content that correspond to the CSI request message described with reference to S403 or S703. For detailed implementation details, refer to the foregoing related descriptions with reference to the CSI request message. Details are not described herein again.

S804: The first access network device makes a handover decision based on the first measurement result from the terminal device, and determines the target cell (group) from the at least one candidate cell (group). For detailed implementation details, refer to the foregoing related descriptions with reference to S404 or S704. Details are not described herein again.

S805: The first access network device sends a handover command to the terminal device, where the handover command indicates the terminal device to perform the handover from the source cell (group) to the target cell (group). Correspondingly, the terminal device receives the handover command from the first access network device.

In this embodiment of this application, the handover command may be carried in an L1 signaling message and/or an L2 signaling message.

In a possible implementation, if the first access network device implements the SRS request message in Manner (1) or Manner (2) described above, the handover command is the second indication information. For example, the second indication information may include identity information of the target cell (group). In an optional implementation, the handover command may further include beam direction information that needs to be used when the terminal device communicates with the target cell (group).

In another possible implementation, if the first access network device implements the SRS request message in Manner (3) described above, that is, if the SRS request message in S803 and the handover indication information (namely, the second indication information) from the first access network device are combined and carried in the same message that is referred to as the handover command, the handover command may include the handover indication information and the sixth indication information. The handover indication information may include identity information of the target cell (group). Optionally, the handover indication information may further include target beam direction information (for example, a target TCI state) that needs to be used when the terminal device communicates with the target cell (group).

In another possible implementation, similar to the activation command described above and obtained by combining the SRS request message with the activation indication information, the handover command obtained by combining the SRS request message with the handover indication information may not explicitly indicate the terminal device to send the uplink SRS, but implicitly indicates the terminal device to send the uplink SRS. For example, it may be agreed on in a protocol that the terminal device is required by default to send the uplink SRS to the target cell after performing the handover to the target cell. Details are not described herein again.

S806 (an optional step): The terminal device sends a response message corresponding to the handover command to the first access network device, where the response message indicates whether the terminal device successfully receives the handover command in S805.

S807: The terminal device sends an uplink channel sounding reference signal (for example, an SRS) to the second access network device on a radio resource of the target cell (group). Correspondingly, the second access network device receives the uplink channel sounding reference signal from the terminal device.

An occasion on which the terminal device sends the uplink channel sounding reference signal to the second access network device may be before the terminal device performs the cell handover, or after the terminal device performs the cell handover, or in a process in which the terminal device performs the cell handover. The sending occasion is not limited in embodiments of this application.

The second access network device may perform operations such as channel estimation and calculation on the received uplink channel sounding reference signal, to sense accurate uplink channel state information. The access network device may more appropriately determine, using the uplink channel state information, a specific manner used to schedule uplink and downlink data transmission for the terminal device. For example, when a channel state is good, a base station may schedule a data packet with more data content for transmission, or schedule a higher-order modulation and coding scheme, or use a precoding scheme applicable to a current channel state, to improve a data transmission capacity.

S808: The first access network device sends ninth indication information to the second access network device, where the ninth indication information indicates to receive the uplink channel sounding reference signal from the terminal device. Correspondingly, the second access network device receives the ninth indication information from the first access network device.

For example, the ninth indication information may include at least one of the following: identity information of the terminal device, identity information of the target cell (group)/candidate cell (group), the identification information of the uplink channel sounding reference signal (for example, the identifier of the SRS resource or resource set), and sending occasion indication information.

It should be noted that, in this embodiment of this application, an occasion of performing S808 is not limited, and S808 may be performed before S803, or may be performed after S803. If the source cell and the target cell belong to a same network device, for example, are managed by a same DU device, S808 may be understood as intra-device interaction. If the source cell and the target cell are managed by different network devices, for example, the source cell is managed by a DU 1, and the target cell is managed by a DU 2, when S808 is implemented, the DU 1 needs to send the ninth indication information to the DU 2 via a CU.

So far, the method for improving the data transmission capacity, using the uplink channel state information, when the terminal device performs the cell handover is described in detail with reference to FIG. 8. In the method, the first access network device can flexibly indicate the terminal device to send the uplink reference signal (for example, the SRS) to the target cell (group) as early as possible, so that the second access network device to which the target cell (group) belongs obtains a channel state through estimation in advance. This helps perform appropriate data transmission scheduling on the terminal device in the target cell (group), thereby improving the data transmission capacity between the terminal device and the target cell (group).

Based on a same inventive concept as the method embodiments, an embodiment of this application provides a communication apparatus. A structure of the communication apparatus may be shown in FIG. 9, and the communication apparatus includes a receiving unit 901 and a sending unit 902.

In a specific implementation, the communication apparatus 900 may be configured to implement the methods performed by the terminal devices in the embodiments shown in FIG. 2 to FIG. 8. The apparatus may be a terminal device, a chip or a chip set in the terminal device, or a part that is of the chip and that is configured to perform a related method function. The receiving unit 901 is configured to: receive first indication information from a first access network device on a radio resource of a source cell, where the first indication information indicates the terminal device to measure a downlink channel state for a downlink reference signal of at least one candidate cell; and receive second indication information from the first access network device, where the second indication information indicates the terminal device to perform a handover from the source cell to a target cell, and the at least one candidate cell includes the target cell. The sending unit 902 is configured to send uplink information to a second access network device on a radio resource of the target cell, where the uplink information includes downlink channel state information of the target cell, and the downlink channel state information of the target cell is obtained by the terminal device by measuring a downlink reference signal of the target cell based on the first indication information.

For example, the receiving unit 901 may be specifically configured to receive third indication information from the first access network device on a radio resource of the source cell, where the third indication information indicates an association relationship between the downlink reference signal of the at least one candidate cell and an uplink radio resource of the source cell, and/or indicates an association relationship between the downlink reference signal of the at least one candidate cell and an uplink radio resource of the at least one candidate cell.

For example, the third indication information is carried in a first message. The first message further indicates the terminal device to measure a reference signal received power RSRP of the downlink reference signal of the at least one candidate cell.

For example, the first access network device includes a first DU. The first DU is controlled by a CU, and at least one DU centrally controlled by the CU includes the first DU. The receiving unit 901 is specifically configured to receive the third indication information from the CU.

For example, the first indication information is carried in a second message. The second message further includes activation indication information. The activation indication information indicates the terminal device to activate a transmission configuration indicator TCI state associated with the downlink reference signal of the at least one candidate cell. That the first indication information indicates the terminal device to measure a downlink channel state for a downlink reference signal of at least one candidate cell specifically includes: The first indication information indicates the terminal device to measure the downlink channel state for the downlink reference signal that is of the at least one candidate cell and that is associated with the to-be-activated TCI state.

For example, the first indication information is carried in a third message. The third message further includes the second indication information. The second indication information includes identification information of the target cell. That the first indication information indicates the terminal device to measure a downlink channel state for a downlink reference signal of at least one candidate cell specifically includes: The first indication information indicates the terminal device to measure a downlink channel state for a downlink reference signal of the target cell.

For example, the receiving unit 901 is specifically configured to receive fourth indication information from the first access network device on a radio resource of the source cell, where the fourth indication information indicates the terminal device to report the downlink channel state information of the target cell to the target cell after the terminal device performs the handover to the target cell.

For example, the uplink information further includes fifth indication information. The fifth indication information indicates whether the uplink information includes the downlink channel state information of the target cell.

For example, the receiving unit 901 is specifically configured to: receive sixth indication information from the first access network device on a radio resource of the source cell, where the sixth indication information indicates the terminal device to send an uplink channel sounding reference signal to the at least one candidate cell; and send an uplink channel sounding reference signal to the target cell on a radio resource of the target cell.

For example, the at least one candidate cell belongs to N candidate cell groups, N is an integer greater than or equal to 1, and each candidate cell group includes a primary cell and at least one secondary cell. The method further includes: receiving seventh indication information from the first access network device on a radio resource of the source cell, where the seventh indication information indicates the terminal device to send, to the second access network device, downlink channel state information obtained by measuring, based on the first indication information, a downlink reference signal of a primary cell in a target cell group to which the target cell belongs, and the target cell includes the primary cell in the target cell group; or the seventh indication information indicates the terminal device to send, to the second access network device, downlink channel state information obtained by measuring, based on the first indication information, downlink reference signals of all cells in the target cell group to which the target cell belongs, and the target cell includes the primary cell and/or a secondary cell in the target cell group. Optionally, that the second indication information indicates the terminal device to perform a handover from the source cell to a target cell specifically includes: The second indication information indicates the terminal device to perform the handover from the source cell to the primary cell in the target cell group, or the second indication information indicates the terminal device to perform the handover from the source cell to the primary cell or the secondary cell in the target cell group.

For example, the downlink state information of the target cell includes at least one of the following: a precoding matrix index PMI, channel quality information CQI, or a rank indicator RI.

In another specific implementation, the communication apparatus may be specifically configured to implement the methods performed by the first access network devices in the embodiments in FIG. 2 to FIG. 8. The device may be a first access network device, a chip or a chip set in the first access network device, or a part that is of the chip and that is configured to perform a related method function. The sending unit 902 is specifically configured to: send first indication information and fourth indication information to the terminal device on a radio resource of a source cell, where the first indication information indicates the terminal device to measure a downlink channel state for a downlink reference signal of at least one candidate cell, and the fourth indication information is used by the terminal device to report downlink channel state information of a target cell to the target cell after the terminal device performs a handover to the target cell; and send second indication information to the terminal device on a radio resource of the source cell, where the second indication information indicates the terminal device to perform the handover from the source cell to the target cell.

For example, the fourth indication information is carried in a first message, and the fourth indication information includes third indication information. The third indication information indicates an association relationship between the downlink reference signal of the at least one candidate cell and an uplink radio resource of the source cell, and/or indicates an association relationship between the downlink reference signal of the at least one candidate cell and an uplink radio resource of the at least one candidate cell.

For example, the first message further indicates the terminal device to measure a reference signal received power RSRP of the downlink reference signal of the at least one candidate cell.

For example, the first access network device includes a first DU, the first DU is controlled by a CU, and at least one DU centrally controlled by the CU includes the first DU and a third DU that manages the at least one candidate cell. The method further includes: sending first resource configuration information to the CU via the first DU, and receiving the third indication information sent by the CU based on the first resource configuration information; or receiving second resource configuration information from the third DU via the CU, and sending the third indication information to the terminal device based on the second resource configuration information.

For example, the first indication information is carried in a second message. The second message further includes activation indication information. The activation indication information indicates the terminal device to activate a transmission configuration indicator TCI state associated with the downlink reference signal of the at least one candidate cell. That the first indication information indicates the terminal device to measure a downlink channel state for a downlink reference signal of at least one candidate cell specifically includes: The first indication information indicates the terminal device to measure the downlink channel state for the downlink reference signal that is of the at least one candidate cell and that is associated with the to-be-activated TCI state.

For example, the first indication information is carried in a third message. The third message further includes the second indication information. The second indication information includes identification information of the target cell. That the first indication information indicates the terminal device to measure a downlink channel state for a downlink reference signal of at least one candidate cell specifically includes: The first indication information indicates the terminal device to measure a downlink channel state for a downlink reference signal of the target cell.

For example, the sending unit 902 is specifically configured to send the fourth indication information to the terminal device on a radio resource of the source cell, where the fourth indication information indicates the terminal device to report the downlink channel state information of the target cell to the target cell after the terminal device performs the handover to the target cell.

For example, the sending unit 902 is specifically configured to send sixth indication information to the terminal device on a radio resource of the source cell, where the sixth indication information indicates the terminal device to send an uplink channel sounding reference signal to the at least one candidate cell.

For example, the at least one candidate cell belongs to N candidate cell groups, N is an integer greater than or equal to 1, and each candidate cell group includes a primary cell and at least one secondary cell. The receiving unit 901 is further configured to receive eighth indication information from a third access network device, where the third access network device manages the N candidate cell groups, and the eighth indication information indicates the primary cell and the at least one secondary cell in each of the N candidate cell groups. The sending unit 902 is further configured to send seventh indication information to the terminal device on a radio resource of the source cell based on the eighth indication information, where the seventh indication information indicates the terminal device to send, to the second access network device, downlink channel state information obtained by measuring, based on the first indication information, a downlink reference signal of a primary cell in a target cell group to which the target cell belongs, and the target cell includes the primary cell in the target cell group; or the seventh indication information indicates the terminal device to send, to the second access network device, downlink channel state information obtained by measuring, based on the first indication information, downlink reference signals of the primary cell and at least one secondary cell in the target cell group to which the target cell belongs, and the target cell includes the primary cell and/or the secondary cell in the target cell group.

For example, that second indication information indicates the terminal device to perform the handover from the source cell to the target cell specifically includes: The second indication information indicates the terminal device to perform the handover from the source cell to the primary cell in the target cell group, or the second indication information indicates the terminal device to perform the handover from the source cell to the primary cell or the secondary cell in the target cell group.

For example, the first access network device includes a first DU, the third access network device includes a third DU, the first DU and the third DU are controlled by a same CU. The receiving unit 901 is specifically configured to receive the eighth indication information from the third DU via the CU.

For example, the downlink state information includes at least one of the following: a precoding matrix index PMI, channel quality information CQI, or a rank indicator RI.

In another specific implementation, the communication apparatus may be specifically configured to implement the methods performed by the terminal devices in the embodiments in FIG. 2 to FIG. 8. The device may be a terminal device, a chip or a chip set in the terminal devices, or a part that is of the chip and that is configured to perform a related method function. The receiving unit 901 is configured to: receive sixth indication information from a first access network device on a radio resource of a source cell, where the sixth indication information indicates the terminal device to send an uplink channel sounding reference signal to at least one candidate cell; and receive second indication information from the first access network device, where the second indication information indicates the terminal device to perform a handover from the source cell to a target cell, and the at least one candidate cell includes the target cell. The sending unit 902 is configured to send an uplink channel sounding reference signal to the target cell on a radio resource of the target cell.

For example, the receiving unit 901 is further configured to receive third indication information from the first access network device on a radio resource of the source cell, where the third indication information indicates an association relationship between an uplink channel sounding reference signal of the at least one candidate cell and an uplink radio resource of the source cell, and/or indicates an association relationship between a downlink reference signal of the at least one candidate cell and an uplink radio resource of the at least one candidate cell.

For example, the third indication information is carried in a first message. The first message further indicates the terminal device to measure a reference signal received power RSRP of the downlink reference signal of the at least one candidate cell.

For example, the first access network device includes a first DU. The first DU is controlled by a CU, and at least one DU centrally controlled by the CU includes the first DU. The receiving unit 901 is specifically configured to receive the third indication information from the CU.

For example, the sixth indication information is carried in a fourth message. The fourth message further includes activation indication information. The activation indication information indicates the terminal device to activate a transmission configuration indicator TCI state associated with the downlink reference signal of the at least one candidate cell. That the sixth indication information indicates the terminal device to send an uplink channel sounding reference signal to at least one candidate cell specifically includes: The sixth indication information indicates the terminal device to send the uplink channel sounding reference signal to the at least one candidate cell based on the TCI state.

For example, the sixth indication information is carried in a fifth message. The fifth message further includes the second indication information. The second indication information includes identification information of the target cell. That the sixth indication information indicates the terminal device to send an uplink channel sounding reference signal to at least one candidate cell specifically includes: The sixth indication information indicates the terminal device to send the uplink channel sounding reference signal to the target cell.

For example, the sixth indication information further indicates a sending occasion of the uplink channel sounding reference signal. The sending occasion includes any one of the following: before the terminal device performs the handover to the target cell, when the terminal device performs the handover to the target cell, and after the terminal device performs the handover to the target cell.

For example, tenth indication information from the first access network device is received on a radio resource of the source cell. The tenth indication information indicates the terminal device to send the uplink channel sounding reference signal to the target cell after the terminal device performs the handover to the target cell.

In another specific implementation, the communication apparatus may be specifically configured to implement the methods performed by the first access network devices in the embodiments in FIG. 2 to FIG. 8. The device may be a first access network device, a chip or a chip set in the first access network device, or a part that is of the chip and that is configured to perform a related method function. The sending unit 902 is configured to: send sixth indication information to the terminal device on a radio resource of the source cell, where the sixth indication information indicates the terminal device to send an uplink channel sounding reference signal to at least one candidate cell; and send second indication information to the terminal device on a radio resource of the source cell, where the second indication information indicates the terminal device to perform a handover from the source cell to a target cell, and the at least one candidate cell includes the target cell.

For example, the sending unit is further configured to send a first message to the terminal device, where the first message includes third indication information, and the third indication information indicates an association relationship between the uplink channel sounding reference signal of the at least one candidate cell and an uplink radio resource of the source cell, and/or indicates an association relationship between a downlink reference signal of the at least one candidate cell and an uplink radio resource of the at least one candidate cell.

For example, the first message further indicates the terminal device to measure a reference signal received power RSRP of the downlink reference signal of the at least one candidate cell.

For example, the first access network device includes a first DU, the first DU is controlled by a CU, and at least one DU centrally controlled by the CU includes the first DU and a third DU that manages the at least one candidate cell. The sending unit 902 is specifically configured to: send first resource configuration information to the CU via the first DU, and receive the third indication information sent by the CU based on the first resource configuration information; or receive second resource configuration information from the third DU via the CU, and send the third indication information to the terminal device based on the second resource configuration information.

For example, the sixth indication information is carried in a fourth message. The fourth message further includes activation indication information. The activation indication information indicates the terminal device to activate a transmission configuration indicator TCI state associated with the downlink reference signal of the at least one candidate cell. That the sixth indication information indicates the terminal device to send an uplink channel sounding reference signal to at least one candidate cell specifically includes: The sixth indication information indicates the terminal device to send the uplink channel sounding reference signal to the at least one candidate cell based on the TCI state.

For example, the sixth indication information is carried in a fifth message. The fifth message further includes the second indication information. The second indication information includes identification information of the target cell. That the sixth indication information indicates the terminal device to send an uplink channel sounding reference signal to at least one candidate cell specifically includes: The sixth indication information indicates the terminal device to send the uplink channel sounding reference signal to the target cell.

For example, the sixth indication information further indicates a sending occasion of the uplink channel sounding reference signal. The sending occasion includes any one of the following: before the terminal device performs the handover to the target cell, when the terminal device performs the handover to the target cell, and after the terminal device performs the handover to the target cell.

For example, the sending unit 902 is specifically configured to send ninth indication information to a second access network device that manages the target cell, where the ninth indication information indicates to receive the uplink channel sounding reference signal from the terminal device.

For example, the sending unit 902 is further configured to send tenth indication information to the terminal device on a radio resource of the source cell, where the tenth indication information indicates the terminal device to send the uplink channel sounding reference signal to the target cell after the terminal device performs the handover to the target cell.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that, for functions or implementations of the modules in embodiments of this application, further refer to related descriptions in the method embodiments.

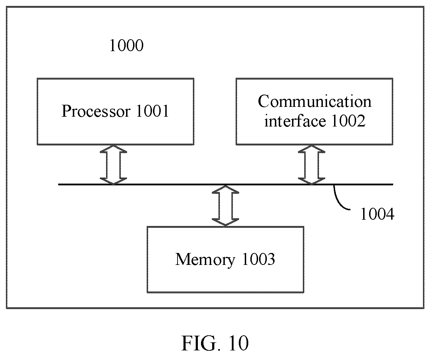

In a possible manner, a communication apparatus 1000 may be shown in FIG. 10. The communication apparatus may be a terminal device or a chip in the terminal device, or may be a network or a chip in the network. The communication apparatus may include a processor 1001, a communication interface 1002, and a memory 1003.

The processor 1001 may be a central processing module (central processing unit, CPU), a digital processing module, or the like. The communication interface 1002 may be a transceiver, or may be an interface circuit like a transceiver circuit, or may be a transceiver chip or the like. The communication apparatus further includes the memory 1003, configured to store a program to be executed by the processor 1001. The memory 1003 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory 1003 is any other medium that can be configured to carry or store expected program code in a form of an instruction or a data structure and that can be accessed by a computer, but is not limited thereto.

The processor 1001 is configured to execute the program code stored in the memory 1003, and is specifically configured to perform the foregoing action. Details are not described herein again in this application.

In this embodiment of this application, a specific connection medium between the communication interface 1002, the processor 1001, and the memory 1003 is not limited. In this embodiment of this application, the memory 1003, the processor 1001, and the communication interface 1002 are connected to each other through a bus 1004 in FIG. 10. The bus is represented by using a thick line in FIG. 10. A connection manner between other components is merely an example for description, and is not limited thereto. The bus may be classified into an address bus, a data bus, a control bus, and the like. For ease of representation, only one thick line is used to represent the bus in FIG. 10, but this does not mean that there is only one bus or only one type of bus.

An embodiment of the present invention further provides a computer-readable storage medium, configured to store computer software instructions that need to be executed by the foregoing processor. The computer-readable storage medium includes a program that needs to be executed by the foregoing processor.

All or a part of the foregoing embodiments may be implemented by using software, hardware, firmware, or any combination thereof. When being implemented by using software, all or a part of the foregoing embodiments may be implemented in a form of a computer program product. The computer program product includes one or more computer instructions. When the computer program instruction is loaded and executed on a computer, the procedure or functions according to embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or a specific function in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or a specific function in one or more blocks in the block diagrams.

These computer program instructions may alternatively be loaded onto a computer or another programmable data processing device, so that a series of operations and steps are performed on the computer or the another programmable device to generate computer-implemented processing. In this way, the instructions executed on the computer or the another programmable device provide steps for implementing a specific function in one or more procedures in the flowcharts and/or a specific function in one or more blocks in the block diagrams.

It is clear that a person skilled in the art can make various modifications and variations to this application without departing from the spirit and scope of this application. In this case, this application is also intended to cover these modifications and variations of this application provided that they fall within the scope of protection defined by the following claims of this application and their equivalent technologies.

## Claims

1. A communication method, wherein the method is applied to a terminal device or a chip in the terminal device, and the method comprises:
receiving first indication information from a first access network device on a radio resource of a source cell, wherein the first indication information indicates the terminal device to measure a downlink channel state for a downlink reference signal of at least one candidate cell;
receiving second indication information from the first access network device, wherein the second indication information indicates the terminal device to perform a handover from the source cell to a target cell, and the at least one candidate cell comprises the target cell; and
sending uplink information to a second access network device on a radio resource of the target cell, wherein the uplink information comprises downlink channel state information of the target cell, and the downlink channel state information of the target cell is obtained by the terminal device by measuring a downlink reference signal of the target cell based on the first indication information.

2. The method according to claim 1, wherein the method further comprises:
receiving third indication information from the first access network device on a radio resource of the source cell, wherein the third indication information indicates an association relationship between the downlink reference signal of the at least one candidate cell and an uplink radio resource of the source cell, and/or indicates an association relationship between the downlink reference signal of the at least one candidate cell and an uplink radio resource of the at least one candidate cell.

3. The method according to claim 2, wherein the third indication information is carried in a first message, and the first message further indicates the terminal device to measure a reference signal received power RSRP of the downlink reference signal of the at least one candidate cell.

4. The method according to claim 2 or 3, wherein the first access network device comprises a first DU, the first DU is controlled by a CU, at least one DU centrally controlled by the CU comprises the first DU, and the receiving third indication information from the first access network device comprises:
receiving the third indication information from the CU.

5. The method according to any one of claims 1 to 4, wherein the first indication information is carried in a second message, the second message further comprises activation indication information, the activation indication information indicates the terminal device to activate a transmission configuration indicator TCI state associated with the downlink reference signal of the at least one candidate cell, and that the first indication information indicates the terminal device to measure a downlink channel state for a downlink reference signal of at least one candidate cell specifically comprises: the first indication information indicates the terminal device to measure the downlink channel state for the downlink reference signal that is of the at least one candidate cell and that is associated with the to-be-activated TCI state.

6. The method according to any one of claims 1 to 5, wherein the first indication information is carried in a third message, the third message further comprises the second indication information, the second indication information comprises identification information of the target cell, and that the first indication information indicates the terminal device to measure a downlink channel state for a downlink reference signal of at least one candidate cell specifically comprises: the first indication information indicates the terminal device to measure a downlink channel state for the downlink reference signal of the target cell.

7. The method according to any one of claims 1 to 6, wherein the method further comprises:
receiving fourth indication information from the first access network device on a radio resource of the source cell, wherein the fourth indication information indicates the terminal device to report the downlink channel state information of the target cell to the target cell after the terminal device performs the handover to the target cell.

8. The method according to any one of claims 1 to 7, wherein the uplink information further comprises fifth indication information, and the fifth indication information indicates whether the uplink information comprises the downlink channel state information of the target cell.

9. The method according to any one of claims 1 to 8, wherein the method further comprises:
receiving sixth indication information from the first access network device on a radio resource of the source cell, wherein the sixth indication information indicates the terminal device to send an uplink channel sounding reference signal to the at least one candidate cell; and
sending an uplink channel sounding reference signal to the target cell on a radio resource of the target cell.

10. The method according to any one of claims 1 to 9, wherein the at least one candidate cell belongs to N candidate cell groups, N is an integer greater than or equal to 1, each candidate cell group comprises a primary cell and at least one secondary cell, and the method further comprises:
receiving seventh indication information from the first access network device on a radio resource of the source cell, wherein the seventh indication information indicates the terminal device to send, to the second access network device, downlink channel state information obtained by measuring, based on the first indication information, a downlink reference signal of a primary cell in a target cell group to which the target cell belongs, and the target cell comprises the primary cell in the target cell group; or the seventh indication information indicates the terminal device to send, to the second access network device, downlink channel state information obtained by measuring, based on the first indication information, downlink reference signals of all cells in the target cell group to which the target cell belongs, and the target cell comprises the primary cell and/or a secondary cell in the target cell group.

11. The method according to claim 10, wherein that the second indication information indicates the terminal device to perform a handover from the source cell to a target cell specifically comprises: the second indication information indicates the terminal device to perform the handover from the source cell to the primary cell in the target cell group, or the second indication information indicates the terminal device to perform the handover from the source cell to the primary cell or the secondary cell in the target cell group.

12. The method according to any one of claims 1 to 11, wherein the downlink state information of the target cell comprises at least one of the following: a precoding matrix index PMI, channel quality information CQI, or a rank indicator RI.

13. A communication method, wherein the method is applied to a first access network device or a chip in the first access network device, the first access network device manages a source cell of a terminal device, and the method comprises:
sending first indication information and fourth indication information to the terminal device on a radio resource of the source cell, wherein the first indication information indicates the terminal device to measure a downlink channel state for a downlink reference signal of at least one candidate cell, and the fourth indication information is used by the terminal device to report downlink channel state information of a target cell to the target cell after the terminal device performs a handover to the target cell; and
sending second indication information to the terminal device on a radio resource of the source cell, wherein the second indication information indicates the terminal device to perform the handover from the source cell to the target cell.

14. The method according to claim 13, wherein the fourth indication information is carried in a first message, the fourth indication information comprises third indication information, and the third indication information indicates an association relationship between the downlink reference signal of the at least one candidate cell and an uplink radio resource of the source cell, and/or indicates an association relationship between the downlink reference signal of the at least one candidate cell and an uplink radio resource of the at least one candidate cell.

15. The method according to claim 14, wherein the first message further indicates the terminal device to measure a reference signal received power RSRP of the downlink reference signal of the at least one candidate cell.

16. The method according to claim 14 or 15, wherein the first access network device comprises a first DU, the first DU is controlled by a CU, at least one DU centrally controlled by the CU comprises the first DU and a third DU that manages the at least one candidate cell, and the method further comprises:
sending first resource configuration information to the CU via the first DU, and receiving the third indication information sent by the CU based on the first resource configuration information; or
receiving second resource configuration information from the third DU via the CU, and sending the third indication information to the terminal device based on the second resource configuration information.

17. The method according to any one of claims 13 to 16, wherein the first indication information is carried in a second message, the second message further comprises activation indication information, the activation indication information indicates the terminal device to activate a transmission configuration indicator TCI state associated with the downlink reference signal of the at least one candidate cell, and that the first indication information indicates the terminal device to measure a downlink channel state for a downlink reference signal of at least one candidate cell specifically comprises: the first indication information indicates the terminal device to measure the downlink channel state for the downlink reference signal that is of the at least one candidate cell and that is associated with the to-be-activated TCI state.

18. The method according to any one of claims 13 to 17, wherein the first indication information is carried in a third message, the third message further comprises the second indication information, the second indication information comprises identification information of the target cell, and that the first indication information indicates the terminal device to measure a downlink channel state for a downlink reference signal of at least one candidate cell specifically comprises: the first indication information indicates the terminal device to measure a downlink channel state for a downlink reference signal of the target cell.

19. The method according to any one of claims 13 to 18, wherein the method further comprises:
sending sixth indication information to the terminal device on a radio resource of the source cell, wherein the sixth indication information indicates the terminal device to send an uplink channel sounding reference signal to the at least one candidate cell.

20. The method according to any one of claims 13 to 19, wherein the at least one candidate cell belongs to N candidate cell groups, N is an integer greater than or equal to 1, each candidate cell group comprises a primary cell and at least one secondary cell, and the method further comprises:
receiving eighth indication information from a third access network device, wherein the third access network device manages the N candidate cell groups, and the eighth indication information indicates the primary cell and the at least one secondary cell in each of the N candidate cell groups; and
sending seventh indication information to the terminal device on a radio resource of the source cell based on the eighth indication information, wherein the seventh indication information indicates the terminal device to send, to a second access network device, downlink channel state information obtained by measuring, based on the first indication information, a downlink reference signal of a primary cell in a target cell group to which the target cell belongs, and the target cell comprises the primary cell in the target cell group; or the seventh indication information indicates the terminal device to send, to the second access network device, downlink channel state information obtained by measuring, based on the first indication information, downlink reference signals of the primary cell and at least one secondary cell in the target cell group to which the target cell belongs, and the target cell comprises the primary cell and/or the secondary cell in the target cell group.

21. The method according to claim 20, wherein that the second indication information indicates the terminal device to perform the handover from the source cell to the target cell specifically comprises: the second indication information indicates the terminal device to perform the handover from the source cell to the primary cell in the target cell group, or the second indication information indicates the terminal device to perform the handover from the source cell to the primary cell or the secondary cell in the target cell group.

22. The method according to claim 20 or 21, wherein the first access network device comprises the first DU, the third access network device comprises the third DU, the first DU and the third DU are controlled by a same CU, and the receiving eighth indication information from a third access network device comprises:
receiving the eighth indication information from the third DU via the CU.

23. The method according to any one of claims 13 to 22, wherein the downlink state information comprises at least one of the following: a precoding matrix index PMI, channel quality information CQI, or a rank indicator RI.

24. A communication method, wherein the method is applied to a first access network device or a chip in the first access network device, the first access network device manages a source cell of a terminal device, the first access network device comprises a first DU, the first DU is controlled by a CU, and the method comprises:
receiving a to-be-measured reference signal resource of at least one candidate cell from the CU;
generating an association relationship between the to-be-measured reference signal resource of the at least one candidate cell and an uplink radio resource of the source cell; and
sending configuration information of the association relationship to the CU, wherein the configuration information of the association relationship is used by the CU to generate radio resource control RRC signaling that is to be sent to the terminal device.

25. The method according to claim 24, wherein the RRC signaling indicates the terminal device to measure a reference signal received power RSRP of a downlink reference signal of the at least one candidate cell.

26. A communication method, wherein the method is applied to a third DU, the third DU manages at least one candidate cell, the third DU is controlled by a CU, and the method comprises:
receiving a to-be-measured reference signal resource of a source cell from the CU;
generating an association relationship between the to-be-measured reference signal resource of the source cell and an uplink radio resource of the at least one candidate cell; and
sending configuration information of the association relationship to the CU, wherein the configuration information of the association relationship is used by the CU to generate radio resource control RRC signaling that is to be sent to the terminal device.

27. The method according to claim 26, wherein the RRC signaling indicates the terminal device to measure a reference signal received power RSRP of a downlink reference signal of the at least one candidate cell.

28. A communication apparatus, comprising:
a receiving unit, configured to: receive first indication information from a first access network device on a radio resource of a source cell, wherein the first indication information indicates the terminal device to measure a downlink channel state for a downlink reference signal of at least one candidate cell; and receive second indication information from the first access network device, wherein the second indication information indicates the terminal device to perform a handover from the source cell to a target cell, and the at least one candidate cell comprises the target cell; and
a sending unit, configured to send uplink information to a second access network device on a radio resource of the target cell, wherein the uplink information comprises downlink channel state information of the target cell, and the downlink channel state information of the target cell is obtained by the terminal device by measuring a downlink reference signal of the target cell based on the first indication information.

29. A communication apparatus, comprising:
a sending unit, configured to: send first indication information and fourth indication information to the terminal device on a radio resource of the source cell, wherein the first indication information indicates the terminal device to measure a downlink channel state for a downlink reference signal of at least one candidate cell, and the fourth indication information is used by the terminal device to report downlink channel state information of a target cell to the target cell after the terminal device performs a handover to the target cell; and send second indication information to the terminal device on a radio resource of the source cell, wherein the second indication information indicates the terminal device to perform the handover from the source cell to the target cell.

30. A communication apparatus, used in a first access network device or a chip in the first access network device, wherein the first access network device manages a source cell of a terminal device, the first access network device comprises a first DU, the first DU is controlled by a CU, and the communication apparatus comprises:
a receiving unit, configured to receive a to-be-measured reference signal resource of at least one candidate cell from the CU;
a processing unit, configured to generate an association relationship between the to-be-measured reference signal resource of the at least one candidate cell and an uplink radio resource of the source cell; and
a sending unit, configured to send configuration information of the association relationship to the CU, wherein the configuration information of the association relationship is used by the CU to generate radio resource control RRC signaling that is to be sent to the terminal device.

31. A communication apparatus, used in a third DU, wherein the third DU manages at least one candidate cell, the third DU is controlled by a CU, and the communication apparatus comprises:
a receiving unit, configured to receive a to-be-measured reference signal resource of a source cell from the CU;
a processing unit, configured to generate an association relationship between the to-be-measured reference signal resource of the source cell and an uplink radio resource of the at least one candidate cell; and
a sending unit, configured to send configuration information of the association relationship to the CU, wherein the configuration information of the association relationship is used by the CU to generate radio resource control RRC signaling that is to be sent to the terminal device.

32. A communication apparatus, comprising at least one processor and an interface circuit, wherein the interface circuit is configured to provide data or code instructions to the at least one processor, and the at least one processor is configured to implement, by using a logic circuit or executing the code instructions, the method according to any one of claims 1 to 12, or the method according to any one of claims 13 to 23, or the method according to any one of claims 24 to 27.

33. A communication system, comprising a communication apparatus configured to implement the method according to any one of claims 1 to 12, and a communication apparatus configured to implement the method according to any one of claims 13 to 23, or a communication apparatus configured to implement the method according to any one of claims 24 to 27.

34. A computer-readable storage medium, wherein the computer-readable medium stores program code, and when the program code is run on a computer, the computer is enabled to perform the method according to any one of claims 1 to 12; or when the program code is run on a computer, the computer is enabled to perform the method according to any one of claims 13 to 23; or when the program code is run on a computer, the computer is enabled to perform the method according to any one of claims 24 to 27.

35. A computer program product, wherein when the computer program product runs on a computer, the computer is enabled to perform the method according to any one of claims 1 to 12, or perform the method according to any one of claims 13 to 23, or perform the method according to any one of claims 24 to 27.
